(19) Europäisches Patentamt
European Patent Office
Office européen des brevets

(11) EP 0 547 551 B1

(12) EUROPEAN PATENT SPECIFICATION

(45) Date of publication and mention
of the grant of the patent:
05.11.1997 Bulletin 1997/45

(51) Int Cl.6: **C08L 3/00**, A23G 3/00,
A23P 1/08

(21) Application number: 92121272.6

(22) Date of filing: 14.12.1992

(54) **Edible films**

Essbare Folie

Film comestible

(84) Designated Contracting States:
BE CH DE DK ES FR GB LI LU NL SE

(30) Priority: 16.12.1991 US 808393
20.11.1992 US 980933

(43) Date of publication of application:
23.06.1993 Bulletin 1993/25

(73) Proprietor: **National Starch and Chemical
Investment Holding Corporation**
Wilmington, Delaware 19809 (US)

(72) Inventors:
• **Lazard, Laurent**
F-69005 Lyon (FR)
• **Doreau, Albert**
F-69400 Villefranche Sur Saone (FR)
• **Nadison, Jeffrey**
F-67000 Strasbourg (FR)

(74) Representative:
**Hagemann, Heinrich, Dr.rer.nat., Dipl.-Chem. et
al
Patentanwälte
Hagemann & Kehl
Postfach 86 03 29
81630 München (DE)**

(56) References cited:
EP-A- 0 400 484          FR-A- 2 193 059
FR-A- 2 210 621

• **DATABASE WPIL Week 0189, Derwent
Publications Ltd., London, GB; AN 89-003123 &
JP-A-63 280 017**

**Description**

This invention relates to edible films that serve as effective physical barriers to the passage of water, lipid, solute, gas, or microbes into, out of, or within foods, pharmaceuticals and other edible products. These films may be used in biodegradable packaging, or as an integral part of the edible product. These films function in a food system without altering the sensory perception that is normally associated with eating the food.

These films are prepared from "all natural" compositions, comprising selected blends of starch, gelatin, plasticizer, water, and lipid. Films tailored to a variety of applications may be created by altering the relative amounts of these components in the compositions. A second type of film may be prepared from starch, preferably low molecular weight, modified starch, gelatin, lipid, water, and, optionally, plasticizer, for use as a non-structural moisture transmission barrier.

Various edible films have been used in manufacturing foods and pharmaceuticals to provide protective coatings, internal barriers, and other structural aspects required in particular applications. For example, waxes have been used to coat cheeses. In bakery products, ingredients such as butter and egg whites have been used to create distinct layers within a baked good. Chocolate and other coatings have been used to enrobe nuts, dried fruit, creams and other confections that are susceptible to handling problems, surface desiccation and oxidation.

Starch blends, including modified high amylose starch derivatives and alpha-amylase converted waxy starch derivatives, together with ingredients such as gelatin and sucrose, have been used in the manufacture of pan coated candies. These and other coatings that incorporate a hydroxypropyl derivative of a 70% amylose corn starch are described in L. Jokay, G.E. Nelson and E.L. Powell, "Development of Edible Amylaceous Coatings for Foods", Food Technology, 21: 12-14, August, 1967. These pan coatings do not constitute a water vapor barrier. Other coatings described in this publication include one containing a blend of a hydroxypropyl derivative of high amylose starch: glycerol:gelatin in a ratio of about 8:1.5:0.5.

US-A-4,915,971 discloses a bi-layer edible film suitable for retarding water transfer among multi-component food products. The edible film comprises a hydrophilic polymer layer formed from carbohydrates such as cellulose ethers and a lipid layer that comprises, for example, hydrogenated oils or beeswax. The use of polyethylene glycol as an optional plasticizer is also disclosed.

US-A-4,543,370, US-A-4,683,256, US-A-4,643,894, US-A-4,725,441, and US-A-4,828,841, disclose a variety of food, pharmaceutical and confectionery coatings that comprise polysaccharides and maltodextrins as components of the coating composition. Also included in the coatings are plasticizers, surfactants, pigments, and aqueous solvents such as alcohol or acetone. Among the advantages disclosed in these patents is that an aspirin tablet can be prepared by coating it with a particular maltodextrin film such that the tablet is easily swallowed but does not lose its ability to disintegrate in the stomach.

US-A-4,636,259, discloses an edible film comprising soybean protein containing air bubbles that is suitable for use in various foods, such as Sushi, that contain a wrapping film.

US-A-4,661,359, US-A-4,810,534, and US-A-4,820,533 disclose edible film coating compositions of low moisture permeability. The compositions disclosed in these patents comprise shellac.

FR-A-2 193 059 discloses an extended gelatine composition comprising 40 to 97 wt. % gelatine and 3 to 60 wt. % of selected converted, chemically modified starches. Extended gelatine compositions which fulfill the compatibility and stability tests have film-forming and colloidal properties compatible to those of gelatine alone.

Derwent Abstract No. 89-003123 (JP 87 0116235) discloses a film composition for forming a soft capsule which contains 30 to 60 wt.% gelatine (based on the composition), 10 to 50 wt. % plasticizer (based on the gelatine), 10 to 50 wt. % natural oil (based on the gelatine), and an unstated amount of water and a light-resisting agent.

A process for improving deep fried potato products, including potato chips, french fried potatoes, and specialty potatoes, wherein the potatoes are coated with an aqueous dispersion of a high amylose starch prior to frying, is disclosed in US-B-27,531. The potato products are characterized by a high degree of crispness which is retained for long periods, superior strength and rigidity, resistance to breakage without undesirable toughness, reduced absorption of oil during frying, reduced variation in the amount of oil absorption, little color variation, and excellent flavor and storage characteristics.

Many coatings known in the art are designed expressly to prevent the passage of a particular gas or vapor, particularly oxygen or water vapor into or out of a food. Generally, lipid-containing coatings have been used to retard the migration of water in its various forms, whereas starch, cellulose, polysaccharide or other carbohydrates have been viewed as structural elements of films which lend particular surface toughness characteristics or oxygen barriers to coated foods.

It has now been discovered that by formulating a composition for use as an edible film comprising a balanced blend of starch, gelatin, plasticizer, lipid and water, having a viscosity of from 100 to 60,000 mPas (cps) at 80°C, an edible film may be prepared which is an effective barrier to migration of a variety of substances into and out of foods. As used herein, "food" is meant to include foods, pharmaceuticals, confectioneries and other edible materials. A typical film is prepared from approximately equal parts of each component. These films are characterized by ease of use, good tensile strength, good elasticity, low transmission of water vapor, volatile flavor compounds, solutes, oxygen and oils, smooth, glossy, non-tacky surface characteristics, good structural integrity and other desirable characteristics which may be exploited in formulating foods. Additionally, the films are effective to exclude microbial contamination, either by excluding oxygen and moisture, as a physical barrier or through the addition of a preservative as an optional constituent of the edible film composition.

The edible film compositions herein are particularly desirable for use in manufacturing foods because they are in the form of a liquid, plastic dispersion having a viscosity of about 100 to 60,000 mPas (cps) at 80°C which permits the composition to be readily handled and applied to foods at the elevated temperatures normally used in food processing. However, upon cooling to about room temperature, the film rapidly sets into a solid surface as the lipid, gelatin and/or starch components gel or crystalize into solid phases. Starches are selected for use in these film compositions by virtue of their water resistance, capacity for durable, strong film formation, and capacity for gelling or retrograding rapidly under these conditions.

Within the parameters disclosed herein for the edible film compositions, one can modify particular compositions for particular uses, e.g., a lipid having a higher melting temperature or a starch having a higher gelatinization temperature may be selected for a composition that will be used on foods which are typically stored at high temperature and humidity conditions (i.e., greater than 35°C (95°F) and 90% relative humidity).

It is believed that the unique properties of these films are obtained as a result of the balance between these components. The starch gels to produce films having good structural strength and water resistance. However, without the use of gelatin to provide better water binding characteristics, the starch based film becomes too brittle and tough upon storage. A film containing only gelatin as a structural component does not set quickly enough to a gel, binds water too readily, lacks sufficient water resistance and is inferior to a film containing a starch and gelatin blend. Likewise, the flexibility of the film is improved by using a plasticizer such as glycerol. However, if the amount of glycerol, relative to the starch and gelatin, is too high, the film becomes tacky, the permeability increases, and the film is not suitable for use in many food applications. Water is necessary in the film to provide flexibility and to hydrate the starch and gelatin and fully develop the characteristics of these components in the edible film.

The lipid-containing, edible film composition is preferred in many products. The lipid improves the impermeability of the film to water vapor transmission and when a relatively high melting point lipid is used, the lipid provides a rapid set to a gel or film as the temperature is permitted to drop. However, the use of high levels of lipid leads to friable films having poor permeability characteristics.

The edible film compositions may be used as coatings for cheese, fresh and dried produce, fresh fish, fresh meats and cured meats, other packaging and container products used in food contact applications, bakery items such as pastry shells, ice cream cones, cream-filled and fruit-filled items, pizza, candy, multi-component snack bars, tablets and capsules for carrying pharmaceutically active components, breaded and battered foods, chewing gum, seasonings, dry mix sachets for sauces, soups, gravies, seasonings, yeast, instant beverages (e.g., coffee, tea, cocoa), and other sweet or savory dry mixes, and snack foods.

In a second aspect of this invention, an edible, biodegradable water barrier film ("the moisture barrier film") comprises selected modified starches, lipid, water and gelatin. At 80°C, the film has a viscosity at or below 35,000 mPas (cps). The film optionally comprises plasticizer. Film plasticity is preferably provided by water and by the lower molecular weight components of the selected modified starches that are used in the water barrier films.

The film is useful as an internal moisture barrier layer or as an external moisture barrier coating in foods contained within some additional external packaging. The film is not intended for external packaging applications in foods.

The film also is useful in a range of biodegradable paper coating applications where a moisture barrier or water resistance are required (e.g., as a biodegradable replacement for paraffin wax coatings in paper).

This invention provides a coating composition for use in preparing a solid, edible film which is a barrier to water, lipid, solute, gas and/or microbes; which coating composition consists essentially of (i) starch, (ii) gelatine, (iii) water, and (iv) plasticizer and/or lipid in amounts sufficient to provide a viscosity of from 100 to 60,000 mPas (cps) at 80° C, with the amount of the starch being from 5 to 45 wt. %, the amount of the gelatine being from 5 to 45 wt. %, the amount of the water being from 5 to 60 wt. %, the amount of the plasticizer being 0 to 45 wt. %, and the amount of the lipid being 5 to 40 wt. %; with the starch being selected from the group consisting of a dextrin, a fluidity starch, a water-soluble high amylose starch containing at least 40 wt. % amylose which has been converted and/or pregelatinized, a water-soluble isolated amylose, a gelatinized and enzymatically debranched starch containing at least 20 wt. % short chain amylose, ester or ether derivatives thereof, and mixtures thereof. Preferred compositions of this kind are disclosed in the attached claims 8 to 10.

Further, the invention relates to a method for preventing microbial growth and extending the shelf-life of cheese, fresh produce, dried produce, fish or meat, by coating all surfaces of the cheese, the fresh produce, the dried produce, the fish or the meat with the coating composition according to the invention.

Finally, the invention relates to a method for improving shelf-stability and appearance of a multi-component processed food by (a) uniformly coating a surface of a component of the processed food with the coating composition according to the invention to form a coated component; (b) bringing the coated component into contact with other component(s) of the multi-component processed food such that only the coated surface of the coated component makes contact with the other components, whereby a short term barrier to migration of water, solute, gas, lipid, or microbes is formed.

The edible film is effective to provide a water, lipid, solute, gas, physical or microbial barrier in foods. This composition optionally contains one or more additional plasticizer, lipid, starch or gelatin, and optionally contains at least one preservative, emulsifier, emulsion stabilizer, flavor, colorant, buffer, acidulant, base or opacifier. The compositions may comprise at least one other polysaccharide such as cellulose, methyl cellulose ethers, food gum, or pectin. The composition may further comprise at least one other protein such as casein, gluten, albumen, soy protein, or collagen.

The composition preferably comprises a starch selected from the group consisting essentially of starch which has been gelatinized and enzymatically debranched to yield at least 20%, by weight, short chain amylose; starch containing at least 40%, by weight, amylose which starch has been converted and is soluble in hot or cold water; starch containing at least 40%, by weight, amylose, which starch is soluble in hot or cold water; isolated amylose which is soluble in hot or cold water; or mixtures thereof; or ester or ether derivatives thereof. A preferred composition comprises water, gelatin, glycerol as the plasticizer, and partially hydrogenated vegetable oil or coconut oil as the lipid, in addition to the preferred starch.

For use in preparing edible films, the compositions herein may be provided in the form of thermally reversible pellets, powders, granules, sheets or solid blocks that are heated to about 85 to 120°C prior to use in fabricating the edible films. The edible films prepared from these compositions are typically from 0.13 mm to 0.50 mm in thickness and are self-supporting. Thinner films may be used where the film is supported by the structure of the food article itself.

Also provided herein are compositions for use in moisture barrier films comprising, by weight, 8 to 35% starch, 10 to 20% gelatin, 15 to 30% lipid and 25 to 60% water, wherein the composition has a viscosity less than about 35,000 mPas (cps) at 80°C and the edible, biodegradable film is effective to provide a water transmission barrier in foods, pharmaceuticals, paper products and biodegradable products. The moisture barrier film optionally contains about 0 to 15% plasticizer. Preferred compositions of this type are disclosed in the attached claims 12 to 20.

The principal components of the films herein are plasticizer(s), lipid(s), gelatin(s), starch(es) and water.

Chief among the plasticizers useful in the films are edible polyhydric alcohols. The term "polyhydric alcohol" generally denotes alcohols formed by substituting hydroxyl groups for a plurality of hydrogen atoms of hydrocarbons. In the present invention, the term also includes monosaccharides and oligosaccharides having a polymerization degree of less than 10. Polyhydric alcohols having useful properties such as moisture retentivity include, for example, dihydric alcohols such as ethylene glycol and propylene glycol; trihydric alcohols such as glycerol; sugar alcohols such as sorbitol, mannitol, maltitol and saccharification products of reduced starch; monosaccharides such as glucose, fructose, galactose and xylose; disaccharides such as saccharose, maltose and lactose; and oligosaccharides.

The polyhydric alcohol is preferably used in an amount that is 10% to 40%, by weight, of the film composition, and most preferably in equal parts by weight of starch and gelatin. If the weight ratio of polyhydric alcohol to starch or gelatin in the film is greater than 1, the film suffers a marked reduction in strength. On the other hand, if the weight ratio is less than 1:4, the film becomes brittle and its releasability from a substrate tends to become poor. Among the polyhydric alcohols, glycerol, propylene glycol and sorbitol are especially preferred.

The above-enumerated polyhydric alcohols may be used in a mixture of two or more. A mixture of a polyhydric alcohol that is liquid at room temperature and a polyhydric alcohol that is solid at room temperature imparts flexibility to the film even at low temperatures. Thus, the film does not undergo crazing or the like during handling at low temperature and hence exhibits improved environmental stability. Examples of the polyhydric alcohol being liquid at room temperature include propylene glycol, glycerol and mixtures thereof. Examples of the polyhydric alcohol being solid at room temperature include sugar alcohols such as sorbitol, mannitol, maltitol, xylitol; monosaccharides such as glucose, fructose, galactose and xylose; disaccharides such as saccharose, maltose and lactose; and oligosaccharides and saccharification products of starch.

Other plasticizers for use herein include polyethylene glycol, glycerin, glycerin triacetate, acetylated monoglyceride, diethylphthalate, triethylcitrate, tributylcitrate, acetyltriethylcitrate and acetyltributylcitrate.

Lipids useful herein include edible fats and oils such as palm oil, palm kernel oil, soybean oil, cottonseed oil, corn oil, peanut oil, olive oil, sunflower seed oil, safflower seed oil, sesame seed oil, and other edible triglycerides, and fatty acids (preferably $C_8$-$C_{18}$ fatty acids), waxes (e.g., beeswax, rice bran wax, candelilla wax, carnauba wax, and paraffin), milk fat, coconut oil, cocoa butter, and partially hydrogenated, hydrogenated or saturated analogs thereof. Lipid blends may be used. To inhibit moisture migration, fats and oils comprising $C_8$-$C_{14}$ fatty acids are preferred (e.g., coconut oil or cocoa butter). In foods having long shelf-life requirements (e.g., more than 1-2 months) higher melting point fats and non-lauric fats are preferred to prevent rancidity or oxidation and fats such as coconut oil are avoided. In the alternative, lauric fats may be used with an antioxidant. A fat having a maximum melting point greater than 40°C is preferred. Also preferred are fats comprising less than 30% liquid oil at 20°C. In a preferred embodiment, about 5 to 40%, by weight, partially hydrogenated vegetable oil or coconut oil is used in the films herein.

Other optional components may be blended into the edible film compositions in amounts effective to improve the film or customize it for certain applications. These amounts may range up to 30%, by weight, of the base film composition. These optional components may be used to add color, flavor, antioxidant character or other properties to the film. Optional components include preservatives, emulsifiers, emulsion stabilizers, flavors, colorants, buffers, acidulants, bases, and opacifiers, generally in amounts of less than 5%, by weight, of each. Other optional components include, generally in amounts less than 30%, by weight, of each: at least one polysaccharide selected from the group consisting of cellulose, methyl cellulose, hydroxypropyl cellulose, hydroxypropylmethyl cellulose, carboxymethyl cellulose, food gum, pectin and at least one protein selected from the group consisting of casein, gluten, albumen, soy protein, and collagen.

Any edible grade of gelatin may be used in the films of this invention. The films preferably contain about 5 to 40%, by weight, of gelatin, or a blend of gelatins,

Since the water content of the film affects the strength, water impermeability, flexibility and other properties of the resulting film, it should be suitably adjusted according to the desired film properties. Specifically, if the water content is relatively high, the resulting film shows an improvement in flexibility and hence resistance to breakage upon extension, but suffers a reduction in resistance to water migration. On the other hand, if the water content is relatively low, the resulting film shows an improvement in strength, but suffers a reduction in flexibility and heat sealability. The use of a plasticizer as described above effectively improves the flexibility of the resulting film; thus, the water content can be reduced to improve film strength while maintaining a desirable degree of flexibility.

The water content of the liquid film composition should preferably be not greater than 40%, by weight, and more preferably, the combined water and plasticizer content of the film should not exceed 50% by weight. The water content of the film itself (in solid form) preferably is about 10 to 25%, by weight.

Sufficient water is needed to disperse the starch and gelatin components of the film. At the quantities preferred herein the film compositions are a plastic, malleable, flowable mass at temperatures of about 75 to 125°C and are solid at room temperature. In this form, the compositions may be sprayed or plated onto a food surface and are particularly convenient for use in processed foods.

Starches suitable for use in the edible films herein include high amylose starches and derivatives thereof. Also useful are starch or polysaccharide blends comprising a majority of high amylose starch. In film applications requiring longer shelf life, a higher amylose content is preferred. Higher amylose content starches provide a more effective barrier and a more opaque film than lower amylose content starches.

Food grade starch ether and ester derivatives may be prepared from fluidity starches or high amylose starches for use herein. The preparation of such derivatives in known in the art and described in publications such as Handbook of Water-Soluble Gums and Resins, Robert L. Davidson (Editor), Chapter 22: "Starch and Its Modifications" by M.W. Rutenberg, McGraw Hill Book Co., New York (1980). Especially preferred are hydroxypropyl starch ether derivatives prepared by reacting starch or dextrin with propylene oxide and starch ester derivatives prepared by reacting starch or dextrin with octenylsuccinic acid anhydride (OSA).

It should be appreciated that the degree of conversion, as indicated by the water fluidity, is affected by the amount of acid or enzyme used as well as the time and temperature. The conversion conditions should be adjusted to provide an appropriate water fluidity.

Conversion procedures are conventional and well-known to those skilled in the art and described in such publications as Handbook of Water-Soluble Gums and Resins, Robert L. Davidson (Editor), Chapter 22: "Starch and Its Modifications" by M.W. Rutenberg, McGraw Hill Book Co. (New York) 1980, and in US-A-4,726,957 (enzyme conversion).

Native high amylose starches are corn starches from hybrid varieties of corn which contain at least about 40% amylose. In contrast, ordinary corn starch typically contains about 28% amylose. As used herein, "high amylose starch" includes the starch from hybrid strains of corn, as well as other starches which contain added, isolated amylose, or which have been enzymatically debranched to yield a starch comprising at least about 40% amylose. This debranched starch may comprise both native long chain amylose and short chain amylose generated by debranching amylopectin molecules.

Because amylose, a linear polymer, readily aligns or associates through hydrogen bonding, starches containing large amounts of amylose will form more rigid gels and stronger, tougher films, and will provide food surfaces having reduced air, water and oil absorption and migration, relative to ordinary starches which typically contain much less than 40% amylose. Other advantages include improved binding properties such that the starch primarily functions as an adhesive and the related property of improved cling or adhesion between dissimilar food substrates. The unique binding, structural and textural characteristics of the high amylose starches make them useful as edible films or barriers in foods.

The traditional formulation of foods with native high amylose starches disadvantageously requires much higher cooking temperatures than the temperatures required for cooking other starches to form a gelatinized starch dispersion in water. Due to the highly bonded linear structure of high amylose starches, full and effective gelatinization of high amylose starches typically requires cooking temperatures of about 154-171°C, when the starch contains about 70% amylose. Thus, to obtain native high amylose starches, or films containing such starches, that are soluble in hot or cold water, super atmospheric cooking temperatures would have to be employed. Furthermore, traditional methods of starch pregelatinization typically produce high amylose starches that are retrograded, or have crystalline portions or are otherwise incapable of full dispersion, or are degraded such that their functional benefits are substantially reduced.

In the alternative, high amylose starches have been modified by derivatization and conversion to enhance their gelatinization and dispersibility characteristics. The use of these "modified starches" is undesirable in food products that are advertised as "natural" products. Gel strength and water resistance qualities of the modified high amylose starches may be reduced in proportion to the amount of modification.

Thus, although native high amylose starch may be prepared by such conventional techniques for use herein, in a preferred embodiment, films containing soluble high amylose starch are formulated without super atmospheric cooking and, optionally, without using a chemically modified starch. These films are prepared by dispersing the soluble high amylose starch in hot or cold water, before or during film formulation. These films are made using a soluble high amylose starch selected from: (i) spray-dried, non-granular starch, characterized in that the starch is substantially non-crystalline, substantially non-retrograded, and fully pre-dispersed; (ii) spray-dried, uniformly gelatinized starch in the form of granular indented spheres, with at least a majority of the granules being whole and unbroken, the starch granules being in the form of loosely-bound agglomerates or individual granules; and (iii) enzymatically debranched, gelatinized starch, comprising at least 40% amylose; and (iv) mixtures thereof.

The high amylose starches are cooked and spray-dried under conditions which provide pregelatinized starches with unique properties. Stabilized, unconverted and/or converted high amylose starches (i.e., derivatized starches such as ether or esters and/or the crosslinked products) may be used as the main component provided the film is designed for applications requiring such modifications. The starch may be derived from any high amylose plant source which contains concentrations of about 40-100% amylose, including, for example, high amylose corn and wrinkled pea. The preferred starches are those derived from high amylose corn hybrids.

High amylose starches which are obtained from special hybrids of corn, barley and pea may contain as much as 70% amylose and are more expensive and more difficult to isolate than the typical native starches from more readily available sources such as corn, potato, wheat, rich, tapioca and the like. However, a starch containing a high percentage of short chain amylose may be produced from any of the more readily available amylopectin-containing starches by treating the starch with an enzyme capable of cleaving the alpha-1,6-D-glucosidic linkages of the amylopectin. This enzymatic treatment cleaves the branch points on the amylopectin molecule, yielding a mixture of short chain amylose and partially debranched amylopectin, together with any remaining amylopectin or any long chain amylose present in the untreated starch. For use herein, the total amylose content of the debranched starch must be at least 40%, by weight.

In addition to the high amylose starches described above, dextrins and fluidity starches are useful in the moisture barrier films herein and may be prepared from any native starch base (e.g., tapioca corn, wheat, rice and potato). Dextrins and fluidity starches are preferred over high amylose starches in the moisture barrier films. Fluidity starches are prepared by hydrolyzing or converting the native starches to lower molecular weight starches and dextrins. In a preferred embodiment, the starches are converted to a water fluidity (WF) of about 30 to 85 WF. The dextrose equivalent (D.E.) of a fluidity starch is typically at least 20, and a dextrin typically has a D.E. of less than 5. In another preferred embodiment, a starch is enzymatically debranched to yield a mixture of starch components comprising at least 20%, preferably at least 40%, short chain amylose.

Dextrins such as those disclosed in US-A-4,510,166 are preferred for use in the moisture barrier films herein.

In the preparation of the converted starches by acid conversion, the granular starch is hydrolyzed to the desired degree in the presence of an acid, such as sulfuric or hydrochloric acid, at a temperature below the gelatinization temperature of the starch. The starch is slurried in water, and the acid (usually in concentrated form) is then added. Typically, the reaction takes place over an 8-16 hour period, after which the acid is neutralized with alkali (e.g., to pH of 5.5), and the starch is recovered by filtration.

In the preparation of the converted starches by enzyme conversion, an alpha-amylase (an alpha-1,4-D-glucosidase), is used to treat an aqueous starch slurry.

Starches suitable for enzymatic treatment prior to use in the films herein include any amylopectin-containing starch that is susceptible to attack by debranching enzyme, such as pullulanase, with the resultant hydrolysis of the alpha-1,6-D-glucosidic bond. Suitable starches include corn, potato, sweet potato, wheat, rice, sago, tapioca, sorghum, waxy maize, smooth pea, Canadian pea, and the like.

The starch is pregelatinized before enzyme treatment to provide a uniformly debranched starch. It may be used in a dried form or as an aqueous dispersion following debranching to form films having desirable properties. Numerous methods of pregelatinizing starch, such as jet-cooking, drum-drying and steam injection atomization processes, are known in the art and may be used before debranching the starch. In a preferred embodiment, the starch is slurried in water and jet-cooked at approximately 149°C (300°F) to instantaneously gelatinize the starch.

The debranched starch, particularly the fully debranched starch, remains soluble and does not crystallize or retrograde if the starch solution or dispersion is dried immediately following the completion of the enzyme treatment. Thus it is preferred to dry the debranched starch as soon as practicable after debranching and preferably no more than 24 hours after debranching. If the debranched starch is obtained in a crystalline form, it may be solubilized by subjecting it to the coupled jet-cooking/spray-drying processes or the steam injection and atomization/spray-drying processes disclosed herein.

Converted debranched starches may be used herein. Suitable conversion of the starches to thin-boiling or fluidity starches useful herein may be achieved by standard oxidative, heat, acid or alpha-amylase enzyme conversion techniques which are well known in the art.

Following gelatinization, the starch is enzymatically treated by the methods disclosed in US-A-4,937,091, Enzymatic treatment must continue until the starch product comprises at least 40%, by weight, total amylose (short chain amylose and/or native or long chain amylose).

## Simultaneous Cooking/Spray-Drying Starch Process

A method for preparing spray-dried, granular pregelatinized starches that are suitable for use in the films of this invention is described in US-A-4,280,851. In this process a slurry of the granular starch is cooked or gelatinized in an atomized state. A slurry of the starch which is to be cooked is injected through an atomization aperture in a nozzle assembly to form a relatively finely-divided spray. A heating medium is also injected through an aperture in the nozzle assembly into the spray of atomized material so as to heat the starch to a temperature effective to gelatinize the starch. An enclosed chamber surrounds the atomization and heating medium injection apertures and defines a vent aperture positioned to enable the heated spray of starch to be atomized again as the starch exits the chamber. Thus, it is a dual-atomization process. The arrangement is such that the lapsed time between passage of the spray of starch through the chamber, i.e., from the atomization aperture and through the vent aperture defines the gelatinization time of the starch. The resulting spray-dried pregelatinized starch comprises uniformly gelatinized starch granules in the form of indented spheres, with a majority of the granules being whole and unbroken and swelling upon rehydration. Nozzles suitable for use in the preparation of these starches are also described in US-A-4,610,760. A process for agglomerating these starches is described in US-A-4,871,398.

A single-atomization method for preparing suitable spray-dried, substantially pregelatinized starch is described in US-A-5,149,799,

Drum-drying processes have not been successfully used to solubilize the native or isolated long chain amyloses due to retrogradation problems. However, drum-drying may be used to cook, solubilize and dry high amylose starches wherein the starches comprise about 40% short chain amylose (i.e., the debranched starches herein). Thus, drum-drying may be used to dry only the enzymatically debranched soluble high amylose starches herein, or blends thereof.

Spray-dried, pregelatinized, non-granular, substantially non-crystalline, substantial non-retrograded high amylose starches that are suitable for use in the films herein may be provided by a novel continuous coupled jet-cooked/spray-drying process. This process is disclosed in US-A-5,131,953.

The process comprises the steps of:

(a) forming a slurry or a paste comprising a converted or unconverted high amylose starch and water;
(b) jet-cooking the aqueous slurry or paste of the starch with steam at a temperature sufficient to fully disperse or solubilize the starch;
(c) immediately conveying and introducing the jet-cooked dispersion or solution into a nozzle of a spray-dryer at substantially the same temperature and pressure as the jet-cooking step;
(d) atomizing the jet-cooked dispersion or solution through the nozzle of the spray-dryer;
(e) drying the atomized mist of the jet-cooked and spray-dried starch as a water-dispersible or water-soluble powder.
(f) recovering the jet-cooked and spray-dried starch as a water-dispersible or water-soluble powder.

The cooking temperature will depend on whether a converted or unconverted starch is used. Typical temperatures are about 138-177°C (280-350°F).

The cooking chamber pressure used in the continuous coupled process typically ranges from 140 to 1030 kPa (20 to 150 psig), and is the saturation pressure of steam at the temperature used plus the small incremental pressure needed to move the dispersion through the chamber. Cooking chamber pressures suitable for high amylose starches are 550 to 1030 kPa (80 to 150 psig), most preferably 690 to 900 kPa (100 to 130 psig) for a starch having an amylose content of about 70%.

An essential step in the above process is the conveying of the thoroughly cooked, substantially fully dispersed starch, under elevated pressure and temperature, to the spray-dryer atomization nozzle. In the preferred method, a low shear pneumatic nozzle is used, and the transfer is carried out at substantially the same temperature and pressure used in the jet-cooking. The transfer is carried out without any venting to the atmosphere. Atomization in a pneumatic

EP 0 547 551 B1

nozzle may be used. The pressure of the atomization gas (steam or air) used must be sufficient for proper atomization into small droplets to allow rapid drying to an appropriate moisture without retrogradation.

Use of a pressure nozzle in the above process requires the insertion of a high pressure pump (13800 to 69000 kPa) (2,000 to 10,000 psig) between the jet-cooker and atomization nozzle. The temperature after passage through the high pressure pump should be maintained substantially equivalent to the jet-cooking chamber temperature. The pressure after the high pressure pump must be sufficient to properly atomize the cook to allow rapid drying to an appropriate moisture without retrogradation.

The spray-dried starch produced by the above process is non-granular and is characterized in that it is substantially non-crystalline and substantially non-retrograded. If the starch is to be converted or otherwise modified, these processes are typically carried out before the coupled jet-cooking/spray-drying process.

Acid conversion of high amylose starches is preferred due to the ease in handling and recovery during manufacturing afforded by a granular starch as opposed to starch in dispersed form as necessitated by enzyme conversion.

A one-step method can be used for making an edible film according to the present invention. In the preferred embodiment of this method, water, starch, gelatin, plasticizer and lipid are combined and heated to about 90°C to provide a film-forming liquid. The hot liquid is then applied to a food surface and permitted to cool and solidify into a film. The film compositions herein rapidly solidify upon cooling, thereby permitting efficient, continuous fabrication and packaging of foods.

In the alternative, the hot film composition may be deposited into molds, applied to drums or solid support surfaces, or cooled into a solid block for storage and/or transportation prior to final use. For use in foods, the premanufactured film composition may be applied as a preformed sheet of film or reheated and sprayed, plated, brushed or applied to the food by immersion of the food into the film, or by any means known in the art.

Concentrations of film components and film spreading thicknesses are so adjusted as to produce a solid film having the strength and handling characteristics desired. For a self-supporting film, a film minimum thickness of approximately 0.10 mm generally is necessary. Film thicknesses of 0.18 to 0.45 mm have been found to be preferred in many applications, although thicker films may be made as well.

Thinner films may be used on food surfaces and between food components where a self-supporting film is not required. In such applications, the film need only be thick enough to provide an effective barrier to the migration of lipid, water, solute, gas and/or microbial agents. Even at thicknesses lower than 0.10 mm, the film is an effective temporary barrier to water transfer. When the film is placed between components of food having differing vapor pressures or moisture contents the film can maintain the existing vapor pressure or moisture gradient for substantial periods of time, effectively retarding water transfer among the food components.

The film components may be adjusted to provide films with greater clarity or with a translucent character (e.g., use less starch or lower molecular weight starch; more plasticizer), or greater opacity (e.g., use more starch, higher molecular weight starch; and added opacifiers, such as pigments or titanium dioxide). Components should be adjusted to yield film flexibility and elasticity that is sufficient to permit ease of handling, adequate drape, and adequate resistance to breakage before, during and after food use, yet allow the film to be self-supporting.

The film compositions may be formed into sheets, then into packets or sachets that may be filled with seasoning, beverage, sauce or gravy mixes and the like, and heat-sealed. These film packets or sachets, due to their water solubility at food cooking temperatures, dissolve during preparation of the food by the consumer, thus forming an edible, biodegradable package. Such packages may be used as an inner package in a packaged food mix (e.g., seasoned noodles or rice, or cake or muffin mix).

The films herein are useful as coatings for fresh, dried or preserved fruits, vegetables, meats and fish items. Such coatings provide surface protection against desiccation and oxidation. Components of the film are selected to provide a mechanically resistant (tough), non-sticky, translucent film with good water and gas barrier properties. Such films are also useful as cheese coatings to provide protection against mold growth as well as reducing desiccation and oxidation during storage.

In baked goods, pizza and other products which are sold fresh or sold after frozen storage, the films herein maintain water activity differences between discontinuous components and reduce water, solute and gas movement within these foods.

These films are also useful as coatings for bits of dried fruit (e.g., raisins) chocolate, cheese, grains and other discrete ingredient pieces that are added to baked goods, confections, snacks, ice cream, yogurt and other foods. The films may be used to insulate discrete layers in multi-component foods, such as creme-filled cookies, cheese-filled snacks, crackers, pastries and doughs, ice cream sandwiches and cookies, frozen pies, pastries, cakes, rolls and pizzas, snacks, danish, and other foods.

In addition, the films may be used to coat pharmaceutically active tablets, or to encapsulate granular particles within pharmaceutically active capsules. In a similar manner, the films may be used to coat or encapsulate flavors, colorants, enzymes and other discrete components used in edible products.

The films may be used in connection with other films (e.g., a lipid film layer) or with a solid support film (e.g., a plastic or cellophane film).

The group of foods described above exemplifies preferred uses of edible films in food applications. The practitioner may readily apply these teachings to other applications in the art. Thus, other foods and other methods of using these starches in foods are included herein.

The moisture barrier films of this invention may be prepared as described above, except that these films preferably do not contain plasticizer and function primarily as a water vapor or moisture transmission barrier in foods, pharmaceuticals, biodegradable paper products and other biodegradable items. When initially applied, the films are not self-supporting. In a preferred embodiment, the moisture barrier films comprise about 20% starch, 20% lipid, 13 to 16% gelatin and 44 to 50% water. The films optionally comprise up to 15% plasticizer.

In a preferred embodiment, the film composition is heated to at least 80°C, adjusted to a viscosity of 6,000 to 10,000 mPas (cps), and sprayed onto the food or other items. In another preferred embodiment, the food or other item is immersed into the heated film composition, or brushed or plated onto the food at a film viscosity of about 15,000 to 35,000 mPas (cps) at 80°C.

To provide an effective moisture transmission barrier, the film is applied at a thickness of at least 0.025 mm, preferably at least 0.03 mm (300 $\mu$m $\pm$ 32.5 $\mu$m).

To permit easy application of the moisture barrier film composition, the amount of starch and water used in the composition is adjusted to provide a maximum viscosity of about 35,000 mPas (cps) at 80°C. In a preferred embodiment, the film composition is formulated to provide a viscosity of about 15,000 to 35,000 mPas (cps) at 80°C and then the composition is diluted (e.g., 50/50) with hot water to provide a film viscosity suitable for spray application.

The moisture barrier film compositions may further comprise any of the optional aspects described herein as suitable for use in edible films. The moisture barrier films may be used for all of those food applications described above for edible films, except that the moisture barrier films are not intended for exterior packaging purposes. The moisture barrier films preferably are used as an internal barrier between food components (e.g., as a barrier between pizza dough and pizza sauce in a refrigerated or frozen pizza).

In addition to such food applications, the moisture barrier film may also be used to coat paper during manufacturing to provide a water barrier that is fully biodegradable. The moisture barrier film preferably is used in place of paraffin or other non- or incompletely-biodegradable wax coatings that are now used commercially in the manufacture of paper, and corrugated board and items manufactured from paper or corrugated board.

In the examples which follow, all spray-drying nozzles are obtained from Spraying Systems Co., Wheaton, Illinois. The following test procedures were used.

## WATER SOLUBILITY MEASUREMENT

### A. Cold Water Solubility

The determination is carried out using distilled water at room temperature. About 0.5 g of starch is dispersed in 30-40 ml of water in a semi-micro stainless steel cup on a Waring blender base (Model 31B292). The blender is run at low speed while the starch is added (all at once) and then run at high speed for 2 minutes. The dispersion is immediately transferred to a 50 ml volumetric flask and diluted to 50 ml with water. A 25 ml portion of the stock dispersion (shaken well to ensure a homogenous dispersion) is removed by pipet and transferred to a 50 ml centrifuge tube. The sample is spun down at 1800-2000 rpms for 15 minutes. Once spun down, 12.5 ml of supernatant is pipetted into a 25 ml volumetric flask, 5 ml of 5 N potassium hydroxide (KOH) are added with swirling, and the mixture is diluted with water. The remainder of the stock dispersion is shaken well, the insoluble starch dispersed with 10 ml of 5 N KOH while swirling. The mixture is diluted to 50 ml with water. The optical rotation of both the concentrated stock solution and the supernatant solution is measured.

$$\% \text{ Cold Water Solubles} = \frac{\text{Optical Rotation of Supernatant / Path Length of Supernatant}}{\text{Optical Rotation of Stock Solution / Path Length of Stock Solution}} \times 100$$

### B. Hot Water Solubility

The procedure is the same as that described above except that boiling distilled water at 90-100°C (194-212°F) is used for dispersing the starch and all subsequent dilutions. No attempt is made to maintain the temperature during the procedure.

## WATER FLUIDITY MEASUREMENT

A. Water Fluidity (WF)

The water fluidity of the starches is measured using a Thomas Rotational Shear-Type Viscometer (manufactured by Arthur H. Thomas Co., Philadelphia, PA 19106), standardized at 30°C with a standard oil having a viscosity of 24.73 cps, which oil requires 23.12± 0.05 sec. for 100 revolutions. Accurate and reproducible measurements of the water fluidity are obtained by determining the time which elapses for 100 revolutions at different solids levels depending on the starch's degree of conversion (as conversion increases, the Water Fluidity increases and the viscosity decreases). The procedure used involves slurrying the required amount of starch (e.g., 6.16 g, dry basis) in 100 ml of distilled water in a covered copper cup and heating the slurry in a boiling water bath for 30 minutes with occasional stirring. The starch dispersion is then brought to the final weight (e.g., 107 g) with distilled water. The time required for 100 revolutions of the resultant dispersion at 81-83°C is recorded and converted to a water fluidity number using a conversion table.

Table I

| Time Required for 100 Revolutions (seconds) Amount of Starch Used (anhydrous, g): | | | | |
|---|---|---|---|---|
| 6.16[a] | 8.80[b] | 11.44[c] | 13.20[d] | Water Fluidity |
| 60.0 | | | | 5 |
| 39.6 | | | | 10 |
| 29.3 | | | | 15 |
| 22.6 | | | | 20 |
| 20.2 | | | | 25 |
| | 33.4 | | | 30 |
| | 27.4 | | | 35 |
| | 22.5 | | | 40 |
| | | 32.5 | | 45 |
| | | 26.8 | | 50 |
| | | 22.0 | | 55 |
| | | | 24.2 | 60 |
| | | | 19.2 | 65 |
| | | | 15.9 | 70 |
| | | | 13.5 | 75 |
| | | | 11.5 | 80 |
| | | | 10.0 | 85 |
| | | | 9.0 | 90 |
| For a, b, c, and d, final weights of starch solutions are 107, 110, 113, and 115 g respectively. | | | | |

B. Calcium Chloride Viscosity (7.2% Solids Test)

The calcium chloride viscosity of the converted high amylose starch is measured using a Thomas Rotation Shear-Type Viscometer standardized at 30°C (86°F) with a standard oil having a viscosity of 24.73 mPas (cps), which oil requires 23.12± 0.05 seconds for 100 revolutions. As the conversion of the starch increases, the viscosity of the starch decreases and the calcium chloride viscosity decreases. Accurate and reproducible measurements of the calcium chloride viscosity are obtained by determining the time which elapses for 100 revolutions at a specific solids level.

A total of 7.2 g of the converted starch (anhydrous basis) is slurried in 100 g of buffered 20% calcium chloride solution in a covered semi-micro stainless steel cup (250 ml capacity available from Eberbach), and the slurry is transferred to a glass beaker and is heated in a boiling water bath for 30 minutes with occasional stirring. The starch solution is then brought to the final weight (107.2 g) with hot (approximately 90-100°C (194-212°F)) distilled water. The time required for 100 revolutions of the resultant solution at 81-83°C (178-181°F) is measured three times in rapid succession and the average of the three measurements in recorded.

The calcium chloride solution is prepared by dissolving 264.8 g of reagent grade calcium chloride dihydrate in 650 ml of distilled water in a tared 1 L glass beaker. Thereafter 7.2 g of anhydrous sodium acetate is dissolved in the solution. The solution is allowed to cool and the pH is measured. If necessary, the solution is adjusted with hydrochloric acid to pH 5.6 ± 0.1. The solution is then brought to weight (1007.2 g) with distilled water.

## GEL PERMEATION CHROMATOGRAPHY

Starches were prepared for analysis by slurring 5 mg of enzymatically debranched starch in 4 ml of dimethylsulfoxide ("DMSO") containing 0.3M sodium nitrate and heating the slurry to 80°C for at least 30 minutes. Samples (200 ul) were injected into an ALC/GPC-150C Chromatograph (Waters Associates, Milford Massachusetts) (equipped with a Nelson 3000 Series Chromatography Data System and two PL gel mixed 10 um columns (Polymer Laboratory, Amherst, Massachusetts), employing DMSO containing 0.03 M sodium nitrate as the mobile phase), and diluted at a rate of 1 ml/min. The columns were calibrated using dextran standards (with molecular weights of 2,000; 20,000; 80,000; 500,000; and 2,000,000 obtained from Pharmacia Fine Chemicals, Piscataway, New Jersey). The percentage of short chain amylose was calculated from the relative area of the peak obtained within the molecular weight range from about 500 to 20,000.

## EXAMPLE 1

The starches used herein were prepared by the following methods.

Part A: Jet Cooking/Spray-Drying (Soluble) High Amylose Starch

The process variables used for jet-cooking/spray-drying unmodified high amylose (about 70% amylose) corn starch are shown below, in Table II. A slurry of unmodified granular high amylose (obtained from National Starch and Chemical Company) was fed into a jet-cooker (model C-15 available from National Starch and Chemical Company). Steam was metered into the slurry to cook the starch and the cooked starch was conveyed to a pneumatic atomization nozzle top mounted in a 35 foot tall, 16 foot diameter Hensey spray-dryer. Steam at 830 kPa (120 psig) was used to atomize the starch. The atomized starch mist was dried with art at 204°C (400°F).

The cold water solubility of the non-granular starch powder was 97.4% and the hot water solubility was greater than 99%.

Table II

| Process Conditions for Jet Cooking/Spray Drying High Amylose Starch | | | | |
|---|---|---|---|---|
| | Part A | Part B | Part C | Part D |
| Slurry Solids | 19% | 32.3% | 10% | 4.5% |
| Cook Solids | 16% | 30% | --- | --- |
| Jet Cooking Temp °C (°F) | 163 (325) | 163 (325) | 142 (287) | 131 (267) |
| Cook Flow | 6.0 gal/min | 8.0 gal/min | 100 cc/min | 125 cc/min |
| Nozzle Type | (a) | (a) | (b) | (d) |
| Dryer Inlet Temp °C (°F) | 230-191 (410-420) | 230-191 (410-420) | 230 (446) | 250 (482) |
| Dryer Outlet Temp °C (°F) | 82-96 (320) | 82-96 (320) | 120 (248) | 150 (302) |
| Atomizing Steam kPa (psig) | 830 (120.0) | 830 (120.0) | (c) | none |

a. Pneumatic nozzle obtained from Spraying System, Inc. (Model 3X1J-152: two-fluid).

b. A two-fluid nozzle was modified to form a three fluid nozzle, as described in K. Masters, Spray-Drying Handbook, 4th Ed., pp. 236-239, George Godwin, London (1985).

c. With the three fluid nozzle, steam flow was present in two fluid flow paths: the primary steam pressure was (210 kPa) (30 psig) secondary pressure was (280 kPa) (40 psig). The third fluid was the starch slurry.

d. The nozzle was a Niro rotary atomizer (a centrifugal wheel atomizer) of the type disclosed in K. Masters, Spray Drying Handbook, 4th Ed., pp. 175-205, George Godwin, London (1985).

Part B: Converted Soluble High Amylose Starch

Under process conditions shown above, in Table II, a converted high amylose corn starch (about 70% amylose) was processed using the coupled jet-cooking/spray-drying process. A slurry of the starch was treated with 2.5% hydrochloric acid at 52°C (126°F) for 16 hours to give a converted starch having a calcium chloride viscosity of 25 seconds. After neutralization with sodium carbonate to a pH of about 6, the granular converted starch was filtered, washed and dried. The starch was then jet-cooked as described in Table II, and the jet-cooked starch dispersion was conveyed to a pneumatic atomization nozzle top mounted in a 35 foot tall, 16 foot diameter Hensey spray-dryer. The atomized starch mist was dried with air at 204°C (400°F).

The converted starch powder was 93.0% soluble in cold water and 97.1% soluble in hot water.

Part C: Ether Derivative of Soluble High Amylose Starch

A sample of 70% amylose corn starch was slurried in water at 100 parts starch to 150 parts water, containing 30 parts sodium sulfate and 1.5 parts sodium hydroxide, and treated with 12%, by weight, of propylene oxide at 40°C (104°F) for 16 hours in a sealed vessel to yield the starch derivative. The starch derivative was washed, filtered and dried. Under process conditions described in Table II, above, the hydroxypropyl high amylose corn starch derivative was made soluble in hot and cold water. The spray-drying nozzle was mounted in a Niro Utility #1 spray-dryer.

Part D: Starch and Gelatin Co-Processed

The converted starch prepared by the acid treatment of Part B, above, was dry-blended at a ratio of 1:1 with 250 Bloom gelatin (obtained from Atlantic Gelatin Division of General Foods Corporation, Woburn, Massachusetts). The blend was slurried in water and jet-cooked and spray-dried under the conditions described in Table II, above. The spray-drying nozzle was mounted in a Niro Utility #1 spray-dryer.

Part E: Enzymatic Debranching

An aqueous slurry (20-30% solids) was prepared employing a waxy maize starch. The aqueous starch slurry was jet-cooked at approximately 300°F (149°C) to gelatinize the starch. The cooked starch dispersion was placed in a constant temperature bath at 58-60°C with constant stirring. The pH was adjusted to 5 with 3% hydrochloric acid.

Approximately 3.8 mls of pullulanase per 100 g of starch were added to the cooked starch dispersion. The pullulanase (E.C. 3.2.1 41, pullulan 6-glucanohydrolase) which was used in a starch debranching enzyme produced by a novel species of <u>Bacillus.</u> This enzyme (Promozyme") was obtained from Novo Industri A/S of Denmark. The enzymatic activity of a 1.25 g/ml solution of Promozyme is standardized at 200 PUN/ml of solution. One PUN (Pullulanase Unit Novo) is the amount of enzyme which, under standard conditions, hydrolyzes pullulan, liberating reducing carbohydrate with a reducing power equivalent to 1 micro-mol glucose per minute. The procedure for determining PUN is available from Novo Industri A/S. About 750 PUN of pullulanase per 100 g waxy maize starch were added to the dispersion.

The pullulanase was permitted to debranch the starch until at least a total of 40% amylose had been reached. the pullulanase was deactivated in preparing debranched starch by heating the dispersion to at least 80°C. The starch dispersion was spray-dried in a Niro Laboratory spray-dryer at an inlet temperature of 200-210°C and an outlet temperature of 120-125°C. The spray-dried starch was screened through #40 mesh screen. The product contained 40-45%, by weight, short chain amylose, measured by gel permeation chromatography.

Part F: Converted Corn Starch

Flojel® starch, an acid-converted 40 WF corn starch, was obtained from National Starch and Chemical Company, Bridgewater, New Jersey.

Part G: Tapioca Dextrin

N-OIL® starch, a tapioca dextrin prepared by the method described in U.S. Pat. No. 4,510,166 to Lenchin, et al., was obtained from National Starch and Chemical Company, Bridgewater, New Jersey.

**EXAMPLE 2**

Using the converted corn starch of Example 1, Part F, above, the edible film compositions shown in Table IV, below, were prepared and tested for dispersed hot viscosity, strength, elasticity and water solubility as described below.

The base composition described in Table III, below, was used as the starting material for preparation of the edible film compositions 1 to 14 shown in Table IV.

EP 0 547 551 B1

Table III

| Basic Edible Film Composition | |
|---|---|
| Ingredients | Percent by Weight |
| gelatin | 7.0 |
| glycerol | 10.0 |
| coconut oil | 7.0 |
| converted corn starch[a] | 6.0 |
| Purity Gum 1773[b] dextrin | 0.8 |
| Citric Acid | 0.2 |
| Benzoic Acid | 0.2 |
| Water | 38.8 |
| TOTAL[c] | 70.0 |

a. See Example 1, Part F, above.

b. A modified dextrin obtained from National Starch and Chemical Company, Bridgewater, New Jersey.

c. See Table VI, below, for a description of the remaining 30% of the composition.

EP 0 547 551 B1

## Table IV

### Edible Film Compositions and Characteristics

| EDIBLE FILM COMPOSITION | Sample Number — Percent, By Weight, of Added Ingredients | | | | | | | | | | | | | |
|---|---|---|---|---|---|---|---|---|---|---|---|---|---|---|
| Ingredients Added to Base Composition[a] | 1 | 2 | 3 | 4[e] | 5 | 6 | 7 | 8 | 9 | 10 | 11 | 12 | 13 | 14 |
| Gelatin | 30 | --- | --- | --- | 15 | 15 | 15 | --- | --- | --- | 10 | 10 | 10 | --- |
| Glycerol | --- | 30 | --- | --- | 15 | --- | --- | 15 | 15 | --- | 10 | 10 | --- | 10 |
| Coconut oil | --- | --- | 30 | --- | --- | 15 | --- | 15 | --- | 15 | 10 | --- | 10 | 10 |
| Converted Corn Starch[b] | --- | --- | --- | 30 | --- | --- | 15 | --- | 15 | 15 | --- | 10 | 10 | 10 |
| EDIBLE FILM COMPOSITION CHARACTERISTICS[c] | 1 | 2 | 3 | 4 | 5 | 6 | 7 | 8 | 9 | 10 | 11 | 12 | 13 | 14 |
| 1. Hot viscosity (80°C) | 7170 | 110 | 6900 | 371200 | 2640 | 6940 | 34300 | 780 | 43600 | 25820 | 3740 | 26780 | 39500 | 31130 |
| Viscosity (45°C) | 14940 | 1857 | 8150 | 369000 | 4820 | 9930 | 53500 | 5680 | 156000 | 41050 | 4600 | 42300 | 48200 | 105400 |
| 2. Penetrometry after 1 day [mm] | 2.25 | 13.10 | 6.26 | 2.80 | 3.17 | 2.43 | 1.15 | 7.20 | 3.64 | 4.40 | 3.83 | 1.82 | 1.39 | 4.03 |
| after 5 days [mm] | 1.73 | 10.13 | 4.44 | 0.76 | 1.90 | 1.45 | 0.15 | 5.27 | 2.44 | | | | | |
| 3. Breaking resistance strength[d] (INSTRON Model 1026) | 66.23 | 0.68 | 1.86 | 0.96 | 2.22 | 5.70 | 5.05 | 0.89 | 3.93 | 0.79 | 1.39 | 2.89 | 1.41 | 2.03 |
| 4. Elasticity (cm) | 1.48 | 3.30 | 2.10 | 0.27 | 4.27 | 5.90 | 2.13 | 2.30 | 0.53 | 0.37 | 2.10 | 3.50 | 0.70 | 0.67 |

a. The basic composition is set forth in Table III. The total added ingredients shown above bring samples Number 1-14 to a total of 100%, by weight, for each composition.

b. Converted corn starch was prepared by the method of Example 1, Part B and Part F, above.

c. See Example 2, below for a description of test methods used to characterize these samples.

d. Breaking resistance strength is expressed in units of [daN·cm$^{-2}$] which are equivalent to 10$^5$Pa (e.g. Sample 1 is 66·23x10$^5$Pa).

e. It was not possible to form a self-supporting film from composition #4 due to its extremely high hot viscosity (371,200 mPas(cps))

To determine optimum compositions for various film applications, the base composition of Table III was varied by the addition of 30%, by weight, of one or more of the four components, i.e., starch, lipid, gelatin and plasticizer. Sample numbers 1-14 of Table IV show the experimental compositions that were prepared in this manner.

The viscosity, expressed as mPas (centipoise (cps)), of Samples 1-14 was tested with a Brookfield viscometer. At 80°C the viscosity varied from 110 mPas (cps) (37% glycerol; 4.2% starch) for Sample 2, to 371,200 mPas (cps) for Sample 4 (7% glycerol; 34.2% starch). At 45°C, the viscosity varied from 1,857 mPas (cps) for Sample 2 (37% glycerol; 4.2% starch) to 369,000 mPas (cps) for Sample 4 (7% glycerol; 34.2% starch). Sample 4 was too viscous for application as a film onto pizza dough. By extrapolation from these data, it was determined that a composition having a viscosity of up to about 60,000 mPas (cps) at 80°C had the best handling characteristics for use as an edible film. Because coconut oil melts at about 36-37°C, the lipid component of Samples 1-14 had little effect upon viscosity at 45°C and 80°C. The greatest variations in hot viscosity were created by modifying the content of converted corn starch. Preferred compositions (e.g., a hot viscosity of less than about 60,000 mPas (cps) at 80°C) were easy to handle, had the requisite elasticity and tensile strength upon cooling and were prepared from approximately equal amounts of starch, lipid and gelatin (e.g., Samples 7, 10, 12, 13 and 14).

Penetrometer measurements were taken with a Penetrometer (Model #PNR 10) and results recorded in millimeters (mm), with the higher members reflecting less resistance to deformation of the composition (structural weakness). Samples with particularly high plasticizer content (e.g., Sample 2 with 37% glycerol) had the highest penetrometer readings.

Breaking strength was measured on an Instron Model 1026 using a 0.4 mm thickness sample film that had been prepared from Samples 1-14 by drawing the hot samples onto plate glass and allowing them to dry in a forced air oven. Sample pieces measuring about 60 mm long, 20 mm wide and 0.4 mm thick were prepared for testing. The breaking strength test results showed that samples high in gelatin (e.g., Sample 1 with 34.9% gelatin) were stronger and more resistant to breaking.

Elasticity was measured on an Instron Model 1026 as the maximum deformation (cm) of the sample before it breaks or ruptures. Elasticity test results showed that samples high in starch content were the least elastic (e.g., Sample 4 with 34.2% starch).

Films prepared from compositions high in glycerol were shiny and sticky. Films prepared from Samples 1, 9 and 14 were stable in hot oil and could be used in batters or breadings for fried foods. Films prepared from samples high in starch were good barriers to vapor transfer, had a short, breakable (inelastic) texture after storage and were opaque relative to other films. The most elastic films were prepared from samples high in gelatin and glycerol and/or coconut oil.

**EXAMPLE 3**

The water vapor permeability of films prepared from the compositions herein was tested by the method described in M. Martin-Polo and A. Voilley, "Comparative Study of the Water Permeability of Edible Film Composed of Gum Arabic and of Glycerolmonostearate", Science des Aliments, 10:473-483 (1990), except that the compositions herein were tested without the use of cellophane or other film substrate as a structural support.

Films were prepared from Samples 1-14 of Example 2, above by drawing the hot solutions onto a glass plate, permitting them to gel to a film and permitting the film to equilibrate from 48 hours under ambient temperature and humidity conditions. Test results are shown in Table V, below.

The results show that excellent, low water vapor transmission rates were provided by all films except Sample 4.

## Table V

### Water Vapor Transmission of Edible Films

| Sample[a] | | | | Conditioned Film | | |
|---|---|---|---|---|---|---|
| | Film Thickness (mm) | Surface Density $(g \cdot m^{-2})$ | $X_i$ (%) | Water Vapor Transmission Rate $(10^4 \, g \cdot m^{-2} \cdot sec^{-1})$ | $X_f$ (%) | Permeability $(X10^{-2} \cdot g \cdot m^{-1} \cdot s^{-1} \cdot Pa^{-1})$ |
| Control | | | | 74.5 ± 2.0 | | |
| 1 | 0.28 ± 0.03 | 253 | 9.7 ± 0.5 | 24.3 ± 0.9 | 36.1 ± 7.1 | 3.43 |
| 2 | 0.40 ± 0.02 | 380 | 16.4 ± 0.2 | 20.0 ± 0.4 | 54.4 ± 0.5 | 4.04 |
| 3 | 0.45 ± 0.03 | 522 | 4.3 ± 0.1 | 22.7 ± 0.5 | 19.3 ± 4.3 | 5.16 |
| 4 | 0.13 ± 0.03 | 125 | ------- | 48.7 ± 2.3 | ------ | 3.20 |
| 5 | 0.51 ± 0.02 | 452 | 11.4 ± 0.5 | 20.2 ± 0.2 | 38.8 ± 1.3 | 5.20 |
| 6 | 0.36 ± 0.03 | 285 | 7.7 ± 0.8 | 19.5 ± 2.8 | 23.5 ± 0.7 | 3.54 |
| 7 | 0.43 ± 0.01 | 401 | 9.5 ± 0.3 | 21.3 ± 1.1 | 28.4 ± 4.8 | 4.62 |
| 8 | 0.31 ± 0.04 | 357 | 9.2 ± 0.1 | 26.1 ± 1.3 | 36.6 ± 1.1 | 4.09 |
| 9 | 0.41 ± 0.03 | 516 | 11.4 ± 0.2 | 24.9 ± 0.6 | 36.8 ± 0.2 | 5.16 |
| 10 | 0.40 ± 0.01 | 452 | 8.3 ± 0.5 | 21.9 ± 1.0 | 21.3 ± 0.4 | 4.42 |
| 11 | 0.40 ± 0.03 | 519 | 42.1 ± 1.4 | 25.0 ± 0.5 | 34.1 ± 1.3 | 5.05 |
| 12 | 0.47 ± 0.02 | 492 | 23.0 ± 2.5 | 25.0 ± 1.7 | 35.6 ± 1.4 | 5.93 |
| 13 | 0.47 ± 0.01 | 437 | 41.7 ± 3.2 | 18.6 ± 0.6 | 27.3 ± 4.1 | 4.41 |
| 14 | 0.35 ± 0.02 | 387 | 9.2 ± 0.1 | 21.0 ± 1.6 | 37.9 ± 1.1 | 3.71 |

a. Samples 1-14 are described in Tables III and IV and in Example 2.

b. Permeability = $\dfrac{\text{Water Vapor Transmission Rate} \times \text{Thickness}}{\Delta P}$, where $\Delta P = 149 Pa$.

16

The film prepared from Sample 4 did provide some resistance to water vapor transmission relative to a control. Furthermore, taking into account the relatively thin film (0.13 mm) prepared from Sample 4, this sample was quite impermeable to water (a permeability of 3.20) and formed an effective barrier to water migration.

Lowest permeability characteristics (best films) were observed in Samples 1, 4, 6 and 14 of Tables III and IV.

## EXAMPLE 4

This example illustrates the preparation of edible film compositions containing high amylose starches. The following composition was used to evaluate the effects of the starches in edible film compositions.

Table VI

| Edible Film Composition High Amylose Starch | |
|---|---|
| Ingredient | Percent by Weight |
| Starch | 8.5 to 24.5[a] |
| Glycerol | 10.0 |
| Coconut Oil | 17.0 |
| Gelatin | 16.0 |
| Purity Gum 1773[b] | 0.8 |
| Benzoic & Citric Acids | 0.4 |
| Water | 47.3 to 31.3[a] |
| TOTAL | 100.0 |

a. Starch and water levels were adjusted to provide a constant viscosity of about 60,000 (mPas) (cps) at 80°C.

b. A modified dextrin obtained from National Starch and Chemical Company.

The compositions were tested for dispersibility (of the dry ingredients in water), appearance of the film, thermoreversibility of the composition, and solubility of the film at neutral and acidic pHs. A description of the high amylose starch variables and the test results are shown in Table VII.

#### Table VII

#### Evaluation of High Amylose Starch Films

| Starch[b] | Starch Level[a] (%) | Dispersibility | Film Appearance | Thermoreversibility | Solubility pH 7.45 | pH 4.40 | Water[c] (%) |
|---|---|---|---|---|---|---|---|
| 1) Converted corn | 16.0 | + + | slightly opaque, smooth, fatty surface | + | 36% | 100% | 18.5 |
| 2) Soluble 70% amylose corn | 11.5 | - | clear, very grainy, very fatty surface | - | 29% | 100% | --- |
| 3) Converted soluble 70% amylose corn | 12.0 | - | clear, very grainy, very fatty surface | - | 28% | 86% | --- |
| 4) Soluble (1:1) Blend of Gelatin and Converted 70% amylose corn | 8.5 | - | very opaque, smooth, fatty surface | - - | 36% | 35% | 22.5 |
| 5) Waxy maize debranched to contain 40-45% short chain amylose | 24.5 | + | very opaque, smooth, dry surface | - - | 63% | 42% | 14.5 |
| 6) Soluble hydroxypropyl derivative of 70% amylose corn | 15.5 | + | slightly opaque, very smooth, fatty surface | + + | | | 19.2 |

a. See composition described in Table VI for percent of other components in the composition. Together, the starch and water comprise 55.8% of the composition.

b. Starches were prepared by the methods of Example 1:Sample 1 by Part F; 2) by Part A; 3) by Part B; 4) by Part D; 5) by Part E; and 6) by Part C).

c. Moisture content of the dry, solid film after storage for 72 hours at 30°C.

### EXAMPLE 5

This example illustrates the use of the edible film compositions as a coating for pizza dough. Films were prepared from several of the compositions described in Table VII and applied to pizza dough that was stored under refrigeration (5°C). The moisture content of the dough was analyzed after 8 and 16 day storage intervals. Results are shown in Table VIII.

Table VIII

| Moisture Content of Refrigerated Pizza Dough[a] | | | |
|---|---|---|---|
| Film[b] | After 2 Days | After 8 Days | After 16 Days |
| | g water/g of dry matter | | |
| Control (no film) | 0.67 | 0.67 | 0.75 |
| 1) Converted corn | 0.44 | 0.55 | 0.66 |
| 4) Soluble (1:1) Blend of 0.54 Gelatin and Converted 70% amylose corn | 0.54 | 0.55 | 0.52 |
| 5) Waxy maize debranched to contain 40-45% short chain amylose | 0.40 | 0.49 | 0.66 |
| 6) Soluble hydroxypropyl derivative of 70% amylose corn | 0.38 | 0.59 | 0.62 |

a. Initial moisture content of the dough was 0.34 g water/g dry matter.

b. See Tables VII and VI for a description of the film compositions.

The results show the edible film compositions were effective barriers to the migration of water vapor into a pizza dough, particularly during short term storage under refrigeration conditions. High amylose starches, including enzymatically debranched waxy maize starch, were particularly effective moisture barriers.

After 7 days of dough storage under refrigerator conditions, pizzas were prepared from the dough and evaluated for organoleptic quality by a five member taste panel. Results (expressed on a scale of: 0=very chewy; 1=chewy; 2=slightly chewy; 3-slightly crispy; 4=crispy; and 5=very crispy) are shown in Table IX.

Table IX

| Organoleptic Evaluation of Pizza | | |
|---|---|---|
| Film[a] | After 2 days | After 7 days |
| Control (no film) | 3.8 | 1.3 |
| 1) Converted Starch | 2.4 | 2.5 |
| 2) Soluble 70% amylose corn | 3.8 | 2.6 |
| 3) Converted soluble 70% amylose corn | 2.3 | 3.1 |
| 4) Soluble (1:1) Blend of Gelatin and Converted 70% amylose corn | 2.9 | 3.4 |
| 5) Waxy maize debranched to contain 40-45% short chain amylose | 1.6 | 4.2 |
| 6) Soluble hydroxypropyl derivative of 70% amylose corn | 3.1 | 2.6 |

a. Film compositions are described in Tables VI and VII.

Pizzas prepared with films containing the debranched waxy maize starch and soluble, converted, hydroxypropyl high amylose starch derivative were preferred (had higher scores, indicating a more crisp texture) after 7 days of storage.

## EXAMPLE 6

Pastry tarts were prepared by brushing an edible film composition prepared from converted starch (Sample 1) in Table VII) onto the inner and outer surfaces of pastry shells, and filling the lined pastry shells with a fruit jam filling.

After two weeks of storage at room temperature, the pastry shell lined with the film was very resistant to migration of water from the fruit jam filling compared to a control pastry prepared without the film. Additionally, the outer surface of the treated pastry shell appeared fresher and less soggy than the control pastry shell. Thus, the film compositions were an effective barrier to water, solute and gas migration into the pastry shell.

## EXAMPLE 7

This example illustrates the preparation of edible film compositions containing partially hydrogenated vegetable oil. The following composition is used to evaluate the effects of the lipid in edible film compositions.

Table X

| Edible Film Composition Lipid Comparison | | |
|---|---|---|
| Composition | A | B |
| Ingredient | Percent by Weight | Percent by Weight |
| Starch | 8.5 to 24.5[a] | 8.5 to 24.5[a] |
| Glycerol | 10.0 | 10.0 |
| Coconut Oil | 17.0 | --- |
| Partially Hydrogenated Vegetable Oil[c] | --- | 17.0 |
| Gelatin | 16.0 | 16.0 |
| Purity Gum 1773[b] | 0.8 | 0.8 |
| Benzoic & Citric Acids | 0.4 | 0.4 |
| Water | 47.3 to 31.3[a] | 47.3 to 31.3[a] |
| TOTAL | 100.0 | 100.0 |

a. Starch and water levels were adjusted to provide a constant viscosity of about 60.000 mPas (cps) at 80°C. (See Example 4, above)

b. A modified dextrin obtained from National Starch and Chemical Company.

c. The partially hydrogenated vegetable oil has a maximum melting point greater than 40°C and comprises less than 30% liquid oil at 20°C.

The films prepared from Composition B are acceptable for use in foods and are functionally comparable to those prepared from Composition A. Films prepared from Composition B have longer shelf-lives than those prepared from Composition A.

## EXAMPLE 8

Using the starches described in Example 1, and various other commercial starches shown in Table XII, below, the moisture barrier films shown in Tables XI and XII, below, were prepared and tested for viscosity and water transmission properties.

Part A: Moisture Barrier Film Composition

The basic composition set forth in Table XI, below, was used as the starting composition for preparation of moisture barrier film samples 15 to 28 that are shown in Part C, Table XII, below.

Table XI

| Basic Moisture Barrier Film Composition | |
|---|---|
| Ingredients | Percent by Weight |
| gelatin[c] | 16.0 |
| glycerol | 10.0 |
| coconut oil | 17.0 |
| starch[a,d] | 8.0 to 35.0 |
| Purity® Gum 1773[b] dextrin | 0.8 |
| Citric Acid | 0.2 |
| Benzoic Acid | 0.2 |
| Water | 20.8 to 47.8 |
| TOTAL | 100.0 |

a. See Example 1, Parts A-G, above.

b. A modified dextrin obtained from National Starch and Chemical Company, Bridgewater, New Jersey.

c. A 225 bloom gelatin was used.

d. Other commercial starch samples are described in Part C, below.

Part B: Water Transmission and Viscosity Tests

Films were prepared as described in Example 2 and deposited at 80°C onto blotting paper at a thickness of 300μm

± 32.5µm. The film/blotting paper composite was dried at ambient temperature for 12 hours, during which the moisture content of the films dropped from about 40% to about 10%. A total of 10 mls of a 60% aqueous sucrose solution was applied to the film/blotting paper composite, the composite was placed into a saturated humidity chamber, and the hydration of the blotting paper was measured as a percent of the initial weight of the film/blotting paper composite after 24 hours at 32°C.

A difference of more than 5% in hydration after 24 hours was considered significant.

Hot viscosity was measured at 80°C using a Rheovisco ERV8 viscometer, set at 10 rpm with either a No. 5 or 6 spindle.

Part C: Starches used in Moisture Barrier Films

The series of commercially available modified starches described in Table XII, below, were used in the film compositions shown in Table XI and tested for water transmission by the method of Part B, above. Where permitted by starch solubility limitations (i.e., very low molecular weight starches could not be used at a sufficiently large percentage to reach upper viscosity limits), the quantity of starch and water used in the films was adjusted to a constant viscosity of about 35,000 mPas (cps) at 80°C.

Table XII

| Moisture Barrier Films - Starch Selection | | |
|---|---|---|
| Starch Sample | Starch Content: Percent by Weight of Film | Percent Water Transmission |
| 15 Converted Soluble High Amylose Corn[a] (OSA Ester Derivative) | 15.0 | 35 |
| 16 Acid-Converted (45 WF) Waxy Maize[b] (OSA Ester Derivative) | 31.0 | 28 |
| 17 Soluble, Co-processed Starch/ Gelatin[a] | 8.5 | 25 |
| 18 Converted Soluble High Amylose Corn[a] | 12.0 | 24 |
| 19 Ether Derivative of Converted Soluble High Amylose Corn[a] | 16.0 | 24 |
| 20 Soluble High Amylose Corn | 11.5 | 24 |
| 21 Ether Derivative of Soluble High Amylose Corn[a] | 15.5 | 23 |
| 22 Enzymatically Debranched Waxy Maize[a] | 20.0 | 23 |
| 23 Converted Corn[a] | 16.0 | 21 |
| 24 Tapioca Dextrin[c] | 20.0 | 27 |
| 25 Converted Waxy Maize (OSA Ester Derivative)[d] | 20.0 | 18 |
| 26 Enzymatically Debranched Waxy Maize[a] | 24.5 | 18 |
| 27 Corn Dextrin[e] | 20.0 | 14 |
| 28 Tapioca Dextrin[a] | 20.0 | 7 |

a. Starch samples were prepared by the methods described in Example 1.

b. Filmkote® starch was obtained from National Starch and Chemical Company, Bridgewater, New Jersey. The "OSA Ester Derivative" of this starch (and other starches herein) is a starch ester derivative obtained by reacting the starch with octenyl succinic acid anhydride.

c. Crystal Gum Dextrin was obtained from National Starch and Chemical Company, Bridgewater, New Jersey.

d. The starch (78-0046) was obtained from National Starch and Chemical Company, Bridgewater, New Jersey.

e. A canary dextrin (No. 48-4771) was obtained from National Starch and Chemical Company, Bridgewater, New Jersey.

All films were effective barriers to water vapor transmission. The best water transmission barriers were observed in films containing dextrin or significantly depolymerized (highly converted) or debranched starches at 16 to 20% of the film composition.

Part D: Optimum Moisture Barrier Films:

Using a skeleton composition containing only the four primary components of the basic composition shown in Table XI above, the quantities of starch (tapioca dextrin), gelatin and coconut oil were varied from 0 to 20%, and the quantity of glycerol was varied from 0 to 15% to determine the optimum quantities of each component needed to yield a good water transmission barrier. Water content was adjusted to provide optimum hot viscosity. Water transmission and hot viscosity were measured by the methods set forth in Part B, above.

Table XIII

| Optimum Moisture Barrier Film Composition | |
|---|---|
| Ingredients | Percent by Weight |
| gelatin[a] | 13 |
| glycerol | 0 |
| coconut oil | 20.0 |
| tapioca dextrin[b] | 20.0 |
| Water | 47.0 |
| TOTAL | 100.0 |

a. A 225 bloom gelatin was used.

b. See Example 1, Parts G, above.

The best films (least water permeable) were obtained from the optimum composition that is illustrated in Table XIII, above (i.e., about 10-13% gelatin, 17-20% lipid and 20% starch) using a tapioca dextrin. Test results showed that a plasticizer (glycerol) increased the water permeability of the film. While an increased lipid content reduced permeability, it also increased the friability of the film, causing it to crack easily. Where the films were made from only two rather than three components, the permeability was higher. The two component films also displayed higher permeability than either starch or gelatin alone.

The preferred hot viscosity ranges (i.e., at 80°C, 35,000 mPas (cps) or less) were obtained from the basic composition. Higher fat or glycerol concentrations lowered the hot viscosity, whereas starch and gelatin did the opposite.

Although emphasis has been placed on foods compositions in these examples, edible compositions for all purposes (e.g., pharmaceutical, biodegradable controlled release coatings, etc), and biodegradable compositions for use in the manufacture of paper, corrugated board and related items, are included within the scope of this invention.

## Claims

1. A coating composition for use in preparing a solid, edible film which is a barrier to water, lipid, solute, gas and/or microbes; which coating composition consists essentially of (i) starch, (ii) gelatin, (iii) water, and (iv) plasticizer and/or lipid in amounts sufficient to provide a viscosity of from 100 to 60,000 mPas (cps) at 80°C, with the amount of the starch being from 5 to 45 wt. %, the amount of the gelatin being from 5 to 45 wt. %, the amount of the water being from 5 to 60 wt. %, the amount of the plasticizer being 0 to 45 wt. %, and the amount of the lipid being 5 to 40 wt.%; with the starch being selected from the group consisting of a dextrin, a fluidity starch, a water-soluble high amylose starch containing at least 40 wt. % amylose which has been converted and/or pregelatinized, a water-soluble isolated amylose, a gelatinized and enzymatically debranched starch containing at least 20 wt. % short chain amylose, ester or ether derivatives thereof, and mixtures thereof.

2. The composition of Claim 1, further comprising at least one additional plasticizer, lipid, starch or gelatin; at least one preservative, antioxidant, emulsifier, emulsion stabilizer, flavor, colorant, buffer, acidulant, base or opacifier; at least one polysaccharide other than starch selected from the group consisting of cellulose, methyl cellulose, hydroxypropyl cellulose, hydroxypropylmethyl cellulose, carboxymethyl cellulose, food gum, and pectin; and/or at least one protein selected from the group consisting of casein, gluten, albumen, soy protein, and collagen.

3. The composition of Claim 1, wherein the plasticizer is selected from the group consisting of glycerin, glycol ether (s), sobitol, polyhydric alcohol, mannitol, maltitol and xylitol; and wherein the lipid is selected from the group consisting of coconut oil; palm oil; palm kernel oil; milk fat; cocoa butter; partially or fully hydrogenated coconut, palm, palm kernel, soybean, cottonseed, corn, peanut, olive, sunflower seed, safflower seed, sesame seed, and other vegetable oil; edible triglyceride; glyceromonostearate, $C_8$-$C_{18}$ fatty acids; wax; and combinations thereof.

4. The composition of Claim 1, wherein the water-soluble, pregelatinized high amylose starch is substantially non-crystalline, substantially non-retrograded and fully gelatinized; wherein the high amylose starch contains 40-70 wt. % amylose, is converted to a water fluidity of about 35, is derivatized with ether groups, and is gelatinized; wherein the enzymatically debranched starch contains 40 to 65 wt. % short chain amylose and optionally 25 to 55 wt. % partially debranched amylopectin; and wherein the high amylose starch is derivatized with 1 to 25%, by weight, propylene oxide to form a hydroxypropyl starch ether derivative.

5. The composition of Claim 1, wherein the starch is blended with gelatin and the starch and gelatin are jet-cooked and spray-dried under conditions effective to gelatinize the starch.

6. The composition of Claim 1, wherein the composition is in the form of thermally reversible pellets, powders, granules, sheets or solid blocks which are heated to about 80 to 120°C prior to use in fabricating the edible film and wherein the edible film is about 0.13 mm to 0.50 mm in thickness and is self-supporting.

7. The composition of Claim 1, wherein the starch: plasticizers: lipid: gelatin ratio is 1:1:1:0.5 and the amount of water is less than 50%.

8. The composition of Claim 1, wherein the amount of the starch is from 10 to 20 wt. %, the amount of the gelatin is from 5 to 10 wt. %, the amount of the plasticizer is from 15 to 25 wt.%, the amount of the lipid is from 15 to 20 wt. %, and the amount of the water is from 15 to 55 wt. %.

9. The composition of Claim 1, wherein the amount of the starch is from 5 to 10 wt. %, the amount of the gelatin is from 20 to 40 wt. %, the amount of the plasticizer is from 5 to 15 wt. %, the amount of the lipid is from 5 to 25 wt. %, and the amount of the water is from 10 to 65 wt. %.

10. The composition of Claim 1, wherein the amount of the starch is from 20 to 30 wt. %, the amount of the gelatin is from 10 to 20 wt. %, the amount of the plasticizer is from 5 to 15 wt. %, and the amount of the water is from 10 to 55 wt. %; wherein the starch is the gelatinized and enzymatically debranched starch which contains 40-65%, by weight, short chain amylose; wherein the plasticizer is glycerol; and wherein the lipid is coconut oil.

11. The composition of Claim 1, wherein the plasticizer is present in an amount from 0 to 15 wt. % and the edible film is a biodegradable moisture barrier film for foods, pharmaceuticals, paper products, and biodegradable products; wherein the viscosity is from 6,000 to 35,000 mPas (cps) at 80°C and the amount of the starch is from 8 to 35 wt. %, the amount of the gelatin is from 10 to 20 wt. %, the amount of the water is from 25 to 60 wt. %, and the amount of the lipid is from 15 to 30%.

12. The composition of Claim 11, wherein the amount of the plasticizer is 0%.

13. The composition of Claim 12, wherein the dextrin is a tapioca dextrin having a DE of less than 5 prepared by treating a starch with a food grade acid at 110-160°C; wherein the fluiditiy starch is prepared by enzyme-, acid-, or oxidative conversion to a water fluidity of 35-80; wherein the gelatinized and enzymatically debranched starch contains about 40-65 wt. % short chain amylose and optionally 25-55 wt. % partially debranched amylopectin; or wherein the high amylose starch is derivatized with 1-25 %, by weight, propylene oxide to form a hydroxypropyl starch ether derivative.

14. The composition of Claim 11, wherein the weight ratio of starch: lipid: gelatin is 1:1:0.75 and the amount of water is less than 55%.

15. The composition of Claim 11, wherein the amount of the starch is from 15 to 25%, the amount of the gelatin is from 10 to 16 wt. %, the amount of the lipid is from 15 to 25 wt. %, and the amount of the water is from 34 to 60 wt. %.

16. The composition of Claim 11, wherein the amount of the starch is from 15 to 22 wt. %, the amount of the gelatin is from 13 to 19 wt. %, the amount of the plasticizer is from 5 to 15 wt. %, the amount of the lipid is from 15 to 25 wt. % and the amount of the water is from 25 to 52 wt. %.

17. The composition of Claim 11, wherein the amount of the starch is from 15 to 25%, the amount of the gelatin is from 10 to 16%, the amount of the lipid is from 15 to 25%, and the amount of the water is from 34-60% and wherein the starch is the gelatinized and debranched starch which contains 40-65 wt. % short chain amylose and the lipid is coconut oil.

18. The composition of Claim 11, wherein the composition is provided in the form of thermally reversible pellets, powders, granules, sheets or solid blacks and the composition is heated to 80-120°C prior to use in fabricating films having a thickness of 0.025-0.50 mm.

19. The composition of Claim 11, wherein the viscosity is from 6,000 to 10,000 mPas (cps) at 80°C and the composition is applied by spraying the product.

20. The composition of Claim 11, wherein the viscosity is from 15,000 to 35,000 mPas (cps) at 80°C and the composition is applied by immersing the product or is applied by brushing or plating the product.

21. A dry mix sachet for packaging ready-to-use portions of a seasoning, a sauce, a gravy, a beverage, a flavor, a lipid-containing food, a low or high water-activity food, which is assembled from an edible film comprising the composition of Claim 1.

22. A method for preventing microbial growth and extending the shelf-life of cheese, fresh produce, dried produce, fish, or meat, by coating all surfaces of the cheese, the fresh produce, the dried produce, the fish, or the meat with the composition of Claim 1.

23. A method for making a confection having an improved appearance and an improved shelf-life by enrobing the confection or a component of the confectionery with the composition of Claim 1.

24. A method for making a baked good or snack food having an improved appearance and an improved shelf-life by coating an exposed surface of the baked good or snack food or a discrete layer within a multi-layer baked good or snack food with the composition of Claim 1.

25. A method for improving shelf-stability and appearance of a multi-component processed food by:

   (a) uniformly coating a surface of a component of the processed food with the composition of Claim 1 to form a coated component;
   (b) bringing the coated component into contact with other component(s) of the multi-component processed food such that only the coated surface of the coated component makes contact with the other components, whereby a short term barrier to migration of water, solute, gas, lipid, or microbes is formed.

26. The method of Claim 29, wherein the multi-component processed food is a pizza; wherein the coated component is a dough; and wherein the other components are pizza sauce and cheese; whereby migration of the pizza sauce into the dough is prevented and the dough remains crisp when the pizza is chilled or frozen, stored and subsequently cooked.

27. The method of Claim 29, wherein the surface of the coated component is uniformly coated by spraying, brushing or plating the component with a dispersion of the composition of Claim 1; by applying the composition of Claim 1 to the component in powdered, granular or melted form; by covering the component with a pre-formed film of the composition of Claim 1; or by dipping the component into a heated dispersion of the composition of Claim 1.

**Patentansprüche**

1. Überzugszusammensetzung zur Verwendung bei der Herstellung einer festen, eßbaren Folie, die eine Barriere für Wasser, Lipid, gelöste Stoffe, Gas und/oder Mikroben ist, wobei die Überzugszusammensetzung im wesentlichen aus (i) Stärke, (ii) Gelatine, (iii) Wasser und (iv) Weichmacher und/oder Lipid in Mengen, die ausreichen bei 80°C eine Viskosität von 100 bis 60000 mPas (cps) zu verleihen, wobei die Menge der Stärke von 5 bis 45 Gew.-%, die Menge der Gelatine von 5 bis 45 Gew.-%, die Menge an Wasser von 5 bis 60 Gew.-%, die Menge an Weichmacher 0 bis 45 Gew.-% und die Menge an Lipid 5 bis 40 Gew.-% beträgt, wobei die Stärke ausgewählt ist aus der aus einem Dextrin, einer flüssigen Stärke, einer wasserlöslichen Stärke mit hohem Amylosegehalt, die mindestens 40 Gew.-% Amylose, die konventiert und/oder vorgeliert worden ist, enthält, einer wasserlöslichen isolierten Amylose, einer gelierten und enzymatisch entzweigten Stärke, die mindestens 20 Gew.-% kurzkettige Amylose enthält, Ester- oder Etherderivaten davon und Mischungen daraus bestehenden Gruppe ausgewählt ist.

2. Zusammensetzung nach Anspruch 1, die ferner mindestens einen zusätzlichen Weichmacher, ein Lipid, eine Stärke oder Gelatine, mindestens einen Konservierungsstoff, ein Antioxidans, einen Emulgator, einen Emulsionsstabilisator, eine Flavor-Verbindung, einen Farbstoff, einen Puffer, ein Säuerungsmittel, eine Base oder ein Trübungsmittel, mindestens ein Polysaccharid, das nicht Stärke ist und das ausgewählt ist aus der aus Cellulose, Methylcellulose, Hydroxypropylcellulose, Hydroxypropylmethylcellulose, Carboxymethylcellulose, Nahrungsmittelgummi und Pectin bestehenden Gruppe ausgewählt ist, und/oder mindestens ein Protein, ausgewählt aus der aus Casein, Gluten, Albumen, Sojaprotein und Collagen bestehenden Gruppe, enthält.

3. Zusammensetzung nach Anspruch 1, worin der Weichmacher aus der aus Glycerin, Glycolether(n), Sorbitol, mehrwehrtigem Alkohol, Mannitol, Maltitol und Xylitol bestehenden Gruppe ausgewählt ist, und worin das Lipid aus der aus Kokosnußöl, Palmöl, Palmkernöl, Milchfett, Kakaobutter, teilweise oder vollständig hydrierten Kokosnuß, Palm, Palmkern, Soja, Baumwollsamen, Mais, Erdnuß, Olive, Sonnenblumensamen, Safflorsamen, Sesamsamen und anderem Pflanzenöl, eßbaren Triglyceriden, Glyceromonostearat, $C_8$-$C_{18}$ Fettsäuren, Wachs und Kombinationen daraus bestehenden Gruppe ausgewählt ist.

4. Zusammensetzung nach Anspruch 1, worin die wasserlösliche, vorgelierte Stärke mit hohem Amylosegehalt im wesentlichen nichtkristallin, im wesentlichen nichtretrogradiert und vollständig geliert ist, worin die Stärke mit hohem Amylosegehalt 40-70 Gew.-% Amylose enthält, bis zu einer Wasserfluidität von etwa 35 konvertiert, mit Etherresten derivatisiert und geliert ist, worin die enzymatisch entzweigte Stärke 40-65 Gew.-% kurzkettige Amylose und gegebenenfalls 25 bis 55 Gew.-% teilweise entzweigtes Amylopectin enthält und worin die Stärke mit hohem Amylosegehalt mit 1 bis 25 Gew.-% Propylenoxid unter Erhalt eines Hydroxypropylstärkeetherderivats derivatisiert ist.

5. Zusammensetzung nach Anspruch 1, worin die Stärke mit Gelatine vermischt ist, und die Stärke und Gelatine unter Bedingungen jet-gekocht und sprühgetrocknet werden, die das Gelieren der Stärke bewirken.

6. Zusammensetzung nach Anspruch 1, worin die Zusammensetzung in Form von thermisch reversiblen Pellets, Pudern, Granulaten, Folien oder festen Blöcken vorliegt, die vor der Verwendung zur Herstellung der eßbaren Folie auf etwa 80 bis 120°C erhitzt werden und worin die eßbare Folie etwa 0,13 mm bis 0,50 mm stark und selbsttragend ist.

7. Zusammensetzung nach Anspruch 1, worin das Verhältnis von Stärke:Weichmachern:Lipid:Gelatine 1:1:1:0,5 beträgt und die Menge an Wasser kleiner als 50% ist.

8. Zusammensetzung nach Anspruch 1, worin die Menge der Stärke 10 bis 20 Gew.-%, die Menge der Gelatine 5 bis 10 Gew.-%, die Menge des Weichmachers 15-25 Gew.-%, die Menge des Lipids 15 bis 20 Gew.-% und die Menge des Wassers 15 bis 55 Gew.-% beträgt.

9. Zusammensetzung nach Anspruch 1, worin die Menge der Stärke 5 bis 10 Gew.-%, die Menge der Gelatine 20 bis 40 Gew.-%, die Menge des Weichmachers 5 bis 15 Gew.-%, die Menge des Lipids 5 bis 25 Gew.-% und die Menge des Wassers 10 bis 65% Gew.-% beträgt.

10. Zusammensetzung nach Anspruch 1, worin die Menge der Stärke 20 bis 30 Gew.-%, die Menge der Gelatine 10 bis 20 Gew.-%, die Menge des Weichmachers 5 bis 15 Gew.-% und die Menge des Wassers 10 bis 55 Gew.-% beträgt, worin die Stärke die gelierte und enzymatisch entzweigte Stärke ist, die 40 bis 65 Gew.-% kurzkettige Amylose enthält, worin der Weichmacher Glycerol ist und worin das Lipid Kokosnußöl ist.

11. Zusammensetzung nach Anspruch 1, worin der Weichmacher in einer Menge von 0 bis 15 Gew.-% vorhanden ist und die eßbare Folie eine biologisch abbaubare Folie, die als Feuchtigkeitsbarriere für Lebensmittel, Pharmazeutika, Papierprodukte und biologisch abbaubbare Produkte dient, ist, worin die Viskosität bei 80°C 6000 bis 35000 mPas (cps) beträgt und die Menge der Stärke 8 bis 35 Gew.-%, die Menge der Gelatine 10 bis 20 Gew.-%, die Menge des Wassers 25 bis 60 Gew.-% und die Menge des Lipids 15 bis 30 Gew.-% beträgt.

12. Zusammensetzung nach Anspruch 11, worin die Menge des Weichmachers 0% beträgt.

13. Zusammensetzung nach Anspruch 12, worin das Dextrin ein Tapiocadextrin mit einem D.E. von weniger als 5 ist, hergestellt durch Behandeln einer Stärke mit Säure von Lebensmittelqualität bei 110 bis 160°C, worin die Fluiditätsstärke durch enzymatische, saure oder oxidative Umsetzung bis zu einer Wasserfluidität von 35 bis 80 hergestellt wird, worin die gelierte und enzymatisch entzweigte Stärke etwa 40 bis 65 Gew.-% kurzkettige Amylose und gegebenenfalls 25 bis 55 Gew.-% teilweise entzweigtes Amylopectin enthält, oder worin die Stärke mit hohem Amylosegehalt mit 1-25 Gew.-% Propylenoxid unter Erhalt eines Hydroxypropylstärkeetherderivat derivativiert ist.

14. Zusammensetzung nach Anspruch 11, worin das Gewichtsverhältnis von Stärke:Lipid:Gelatine 1:1:0,75 beträgt und die Menge an Wasser kleiner als 55% ist.

15. Zusammensetzung nach Anspruch 11, worin die Menge der Stärke 15 bis 25 Gew.-%, die Menge der Gelatine 10 bis 16 Gew.-%, die Menge des Lipids 15 bis 25 Gew.-% und die Menge des Wassers 34 bis 60 Gew.-% beträgt.

16. Zusammensetzung nach Anspruch 11, worin die Menge der Stärke 15 bis 22 Gew.-%, die Menge der Gelatine 13 bis 19 Gew.-%, die Menge des Weichmachers 5 bis 15 Gew.-%, die Menge des Lipids 15 bis 25 Gew.-% und die Menge des Wassers 25 bis 52 Gew.-% beträgt.

17. Zusammensetzung nach Anspruch 11, worin die Menge der Stärke 15 bis 25 Gew.-%, die Menge der Gelatine 10 bis 16 Gew.-%, die Menge des Lipids 15 bis 25 Gew.-% und die Menge des Wassers 34 bis 60 Gew.-% beträgt, und worin die Stärke eine gelierte und entzweigte Stärke, die 40 bis 65 Gew.-% kurzkettige Amylose enthält, ist und das Lipid Kokosnusöl ist.

18. Zusammensetzung nach Anspruch 11, worin die Zusammensetzung in Form von thermisch reversiblen Pellets, Pudern, Granulaten, Folien oder festen Blöcken vorliegt, und die Zusammensetzung vor der Verwendung zur Herstellung von Folien einer Stärke von 0,025 bis 0,50 mm auf 80-120°C erwärmt wird.

19. Zusammensetzung nach Anspruch 11, worin die Viskosität bei 80°C 6000 bis 10000 mPas (cps) beträgt, und die Zusammensetzung durch Besprühen des Produkts aufgetragen wird.

20. Zusammensetzung nach Anspruch 11, worin die Viskosität bei 80°C von 15000 bis 35000 mPas (cps) beträgt und die Zusammensetzung durch Eintauchen des Produkts, Streichen oder Beschichten aufgetragen wird.

21. Beutel für Trockenmischungen zum Abpacken von gebrauchsfertigen Portionen einer Gewürzmischung, einer Soße, eines Bratensaftes, eines Getränks, einer Flavor-Verbindung, eines fetthaltigen Nahrungsmittels, eines mehr oder weniger wasseraktiven Nahrungsmittels, die von der eßbaren Folie, enthaltend die Zusammensetzung nach Anspruch 1, zusammen gehalten werden.

22. Verfahren zum Verhindern mikrobiellen Wachstums und zum Verlängern der Lagerstabilität von Käse, frischen Erzeugnissen, trockenen Erzeugnissen, Fisch oder Fleisch durch Beschichten aller Oberflächen des Käses, des frischen Erzeugnisses, des trockenen Erzeugnisses, des Fischs oder des Fleischs mit der Zusammensetzung nach Anspruch 1.

23. Verfahren zur Herstellung eines Konfekts mit verbessertem Aussehen und verbesserter Haltbarkeit durch Einhüllen des Konfekts oder eines Bestandteils des Konfekts mit der Zusammensetzung nach Anspruch 1.

24. Verfahren zur Herstellung von Backwaren oder Knabberartikeln mit verbessertem Aussehen und verbesserter Haltbarkeit durch Beschichten einer exponierten Oberfläche der Backware oder des Knabberartikels oder einer bestimmten Schicht in einer vielschichtigen Backware oder einem vielschichtigen Knabberartikel mit der Zusammensetzung nach Anspruch 1.

25. Verfahren zur Verbesserung der Lagerstabilität und des Aussehens eines aus mehreren Bestandteilen bestehenden, verarbeiteten Nahrungsmittels, durch:

(a) gleichmäßiges Beschichten einer Oberfläche eines Bestandteils des verarbeiteten Nahrungsmittels mit der Zusammensetzung nach Anspruch 1, um einen beschichteten Bestandteil zu bilden;
(b) Inkontaktbringen des beschichteten Bestandteils mit (einem) anderen Bestandteil(en) des aus vielen Bestandteilen bestehenden, verarbeiteten Nahrungsmittels, so daß nur die beschichtete Oberfläche des beschichteten Bestandteils in Kontakt mit anderen Bestandteilen kommt, wobei eine kurzzeitige Barriere bezüglich der

Migration von Wasser, gelösten Stoffen, Gas, Lipid oder Mikroben gebildet wird.

**26.** Verfahren nach Anspruch 25, wobei das aus mehreren Bestandteilen bestehende, verarbeitete Nahrungsmittel eine Pizza ist, worin der beschichtete Bestandteil ein Teig ist und worin die anderen Bestandteile Pizzasoße und Käse sind, wobei die Migration der Pizzasoße in den Teig verhindert wird und der Teig knusprig bleibt, wenn die Pizza gekühlt oder gefroren, gelagert und anschließend zubereitet wird.

**27.** Verfahren nach Anspruch 25, worin die Oberfläche des beschichteten Bestandteils gleichmäßig durch Sprühen, Streichen oder Aufbringen einer Dispersion der Zusammensetzung nach Anspruch 1 auf den Bestandteil, durch Auftragen der Zusammensetzung nach Anspruch 1 auf den Bestandteil in pulverisierter, granulärer oder geschmolzener Form, durch Bedecken des Bestandteiles mit einer vorgeformten Folie der Zusammensetzung nach Anspruch 1, oder durch Eintauchen des Bestandteils in eine erwärmte Dispersion der Zusammensetzung nach Anspruch 1 beschichtet wird.

**Revendications**

**1.** Composition de revêtement destinée à être utilisée dans la préparation d'un film solide comestible qui constitue une barrière s'opposant à l'eau, un lipide, un soluté, un gaz et/ou des micro-organismes ; composition de revêtement qui consiste essentiellement en (i) de l'amidon, (ii) de la gélatine, (iii) de l'eau et (iv) un plastifiant et/ou un lipide en des quantités suffisantes pour conférer une viscosité de 100 à 60 000 mPa.s (cps) à 80°C, la quantité d'amidon étant comprise dans l'intervalle de 5 à 45 % en poids, la quantité de gélatine étant comprise dans l'intervalle de 5 à 45 % en poids, la quantité d'eau étant comprise dans l'intervalle de 5 à 60 % en poids, la quantité de plastifiant étant comprise dans l'intervalle de 0 à 45 % en poids et la quantité de lipide étant comprise dans l'intervalle de 5 à 40 % en poids ; l'amidon étant choisi dans le groupe consistant en une dextrine, un amidon fluide, un amidon hydrosoluble à haute teneur en amylose contenant au moins 40 % en poids d'amylose qui a été transformé et/ou prégélatinisé, un amylose isolé hydrosoluble, un amidon gélatinisé et ayant subi une déramification enzymatique, contenant au moins 20 % en poids d'amylose à chaîne courte, ses esters ou dérivés, ainsi que leurs mélanges.

**2.** Composition suivant la revendication 1, comprenant en outre au moins un constituant supplémentaire consistant en un plastifiant, un lipide, un amidon ou de la gélatine ; au moins un conservateur, un anti-oxydant, un émulsionnant, un stabilisant d'émulsion, un arôme, un colorant, un tampon, un acidulant, une base ou un opacifiant ; au moins un polysaccharide autre que l'amidon, choisi dans le groupe consistant en la cellulose, la méthylcellulose, l'hydroxypropylcellulose, l'hydroxypropylméthylcellulose, la carboxyméthylcellulose, une gomme à usage alimentaire et la pectine ; et/ou au moins une protéine choisie dans le groupe consistant en caséine, gluten, blanc d'oeuf, protéine de soja et collagène.

**3.** Composition suivant la revendication 1, dans laquelle le plastifiant est choisi dans le groupe consistant en le glycérol, un ou plusieurs éthers de glycol, le sorbitol, un alcool polyhydroxylique, le mannitol, le maltitol et le xylitol ; et dans laquelle le lipide est choisi dans le groupe consistant en l'huile de coprah ; l'huile de palme ; l'huile de noix de palme ; la matière grasse laitière ; le beurre de cacao ; les huiles, partiellement ou totalement hydrogénées, de coprah, de palme, de noix de palme, de soja, de graines de cotonnier, de maïs, d'arachide, d'olive, de tournesol, de carthame, de sésame et une autre huile végétale ; un triglycéride comestible ; un glycéromonostéarate ; des acides gras en $c_8$ à $C_{18}$ ; une cire et leurs associations.

**4.** Composition suivant la revendication 1, dans laquelle l'amidon prégélatinisé hydrosoluble, à haute teneur en amylose, est pratiquement non cristallin, pratiquement non rétrogradé et totalement gélatinisé ; l'amidon à haute teneur en amylose contient 40 à 70 % en poids d'amylose, est hydrolysé à une fluidité en milieu aqueux d'environ 35, est transformé en dérivé avec des groupes éther et est gélatinisé ; l'amidon enzymatiquement déramifié contient 40 à 65 % en poids d'amylose à chaîne courte et facultativement 25 à 55 % en poids d'amylopectine partiellement déramifiée ; et l'amidon à haute teneur en amylose est transformé en dérivé avec 1 à 25 % en poids d'oxyde de propylène pour former un dérivé d'éther hydroxypropylique d'amidon.

**5.** Composition suivant la revendication 1, dans laquelle l'amidon est mélangé à de la gélatine et l'amidon et la gélatine sont soumis à une cuisson par jet et à un séchage par pulvérisation dans des conditions efficaces pour la gélatinisation d'amidon.

**6.** Composition suivant la revendication 1, qui est sous forme de pastilles, poudres, granules, feuilles ou blocs solides, aptes à l'inversion à chaud, qui sont chauffés à une température d'environ 80 à 120°C avant leur utilisation dans la production du film comestible, et dans laquelle le film comestible a une épaisseur d'environ 0,13 mm à 0,50 mm et est autoporteur.

7. Composition suivant la revendication 1, dans laquelle le rapport amidon:plastifiants:lipide:gélatine est égal à 1:1: 1:0,5 et la quantité d'eau est inférieure à 50 %.

8. Composition suivant la revendication 1, dans laquelle la quantité d'amidon est comprise dans l'intervalle de 10 à 20 % en poids, la quantité de gélatine est comprise dans l'intervalle de 5 à 10 % en poids, la quantité de plastifiant est comprise dans l'intervalle de 15 à 25 % en poids, la quantité de lipide est comprise dans l'intervalle de 15 à 20 % en poids et la quantité d'eau est comprise dans l'intervalle de 15 à 55 % en poids.

9. Composition suivant la revendication 1, dans laquelle la quantité d'amidon est comprise dans l'intervalle de 5 à 10 % en poids, la quantité de gélatine est comprise dans l'intervalle de 20 à 40 % en poids, la quantité de plastifiant est comprise dans l'intervalle de 5 à 15 %, la quantité de lipide est comprise dans l'intervalle de 5 à 25 % en poids et la quantité d'eau est comprise dans l'intervalle de 10 à 65 % en poids.

10. Composition suivant la revendication 1, dans laquelle la quantité d'amidon est comprise dans l'intervalle de 20 à 30 % en poids, la quantité de gélatine est comprise dans l'intervalle de 10 à 20 % en poids, la quantité de plastifiant est comprise dans l'intervalle de 5 à 15 % en poids, et la quantité d'eau est comprise dans l'intervalle de 10 à 55 % ; l'amidon est l'amidon gélatinisé et enzymatiquement déramifié qui contient 40 à 65 % en poids d'amylose à chaîne courte ; le plastifiant est le glycérol ; et le lipide est l'huile de coprah.

11. Composition suivant la revendication 1, dans laquelle le plastifiant est présent en une quantité de 0 à 15 % en poids et le film comestible est un film biodégradable servant de barrière contre l'humidité pour des aliments, des agents pharmaceutiques, des produits constitués de papier et des produits biodégradables ; la viscosité est comprise dans l'intervalle de 6000 à 35 000 mPa.s (cps) à 80°C et la quantité d'amidon est comprise dans l'intervalle de 8 à 35 % en poids, la quantité de gélatine est comprise dans l'intervalle de 10 à 20 % en poids, la quantité d'eau est comprise dans l'intervalle de 25 à 60 % en poids et la quantité de lipide est comprise dans l'intervalle de 15 à 30 %.

12. Composition suivant la revendication 11, dans laquelle la quantité de plastifiant est égale à 0 %.

13. Composition suivant la revendication 12, dans laquelle la dextrine est une dextrine de manioc ayant une valeur de ED inférieure à 5 préparée en traitant un amidon avec un acide à usage alimentaire à une température de 110 à 160°C ; l'amidon fluide est préparé par hydrolyse enzymatique, hydrolyse acide ou hydrolyse oxydative à une fluidité en milieu aqueux de 35 à 80 ; l'amidon gélatinisé et enzymatiquement déramifié contient environ 40 à 65 % en poids d'amylose à chaîne courte et facultativement 25 à 55 % en poids d'amylopectine partiellement déramifiée ; ou l'amidon à haute teneur en amylose est transformé en dérivé avec 1 à 25 % en poids d'oxyde de propylène pour former un dérivé d'éther hydroxypropylique d'amidon.

14. Composition suivant la revendication 11, dans laquelle le rapport pondéral amidon:lipide:gélatine est égal à 1:1: 0,75 et la quantité d'eau est inférieure à 55 %.

15. Composition suivant la revendication 11, dans laquelle la quantité d'amidon est comprise dans l'intervalle de 15 à 25 % en poids, la quantité de gélatine est comprise dans l'intervalle de 10 à 16 % en poids, la quantité de lipide est comprise dans l'intervalle de 15 à 25 % en poids et la quantité d'eau est comprise dans l'intervalle de 34 à 60 % en poids.

16. Composition suivant la revendication 11, dans laquelle la quantité d'amidon est comprise dans l'intervalle de 15 à 22 % en poids, la quantité de gélatine est comprise dans l'intervalle de 13 à 19 % en poids, la quantité de plastifiant est comprise dans l'intervalle de 5 à 15 % en poids, la quantité de lipide est comprise dans l'intervalle de 15 à 25 % en poids et la quantité d'eau est comprise dans l'intervalle de 25 à 52 % en poids.

17. Composition suivant la revendication 11, dans laquelle la quantité d'amidon est comprise dans l'intervalle de 15 à 25 %, la quantité de gélatine est comprise dans l'intervalle de 10 à 16 %, la quantité de lipide est comprise dans l'intervalle de 15 à 25 % et la quantité d'eau est comprise dans l'intervalle de 34 à 60 %, et l'amidon est l'amidon gélatinisé et déramifié qui contient 40 à 65 % en poids d'amylose à chaîne courte et le lipide consiste en huile de coprah.

**18.** Composition suivant la revendication 11, qui est fournie sous forme de pastilles, poudres, granules, feuilles ou blocs solides, aptes à l'inversion à chaud, et la composition est chauffée à une température de 80 à 120°C avant son utilisation dans la production de films ayant une épaisseur de 0,025 à 0,50 mm.

**19.** Composition suivant la revendication 11, dans laquelle la viscosité est comprise dans l'intervalle de 6000 à 10 000 mPa.s (cps) à 80°C et son application est effectuée par pulvérisation du produit.

**20.** Composition suivant la revendication 11, dans laquelle la viscosité est comprise dans l'intervalle de 15 000 à 35 000 mPa.s (cps) à 80°C, et son application est effectuée par immersion du produit ou est effectuée par passage du produit à la brosse ou par placage.

**21.** Sachet pour mélange sec, destiné à l'emballage de portions prêtes à l'emploi d'un assaisonnement, d'une sauce, d'un fond, d'une boisson, d'un arôme, d'un aliment contenant un lipide, d'un aliment à faible ou forte activité d'eau, qui est assemblé à partir d'un film comestible comprenant la composition suivant la revendication 1.

**22.** Procédé pour empêcher la croissance microbienne et prolonger la durée de conservation du fromage, d'un produit frais, d'un produit sec, du poisson ou de la viande, par revêtement de toutes les surfaces du fromage, du produit frais, du produit sec, du poisson ou de la viande avec la composition suivant la revendication 1.

**23.** Procédé pour préparer un produit de confiserie présentant un aspect amélioré et une durée de conservation améliorée, par enrobage du produit de confiserie ou d'un constituant du produit de confiserie avec la composition suivant la revendication 1.

**24.** Procédé pour la préparation d'une denrée alimentaire cuite au four ou d'une denrée alimentaire pour collation, présentant un aspect amélioré et une durée de conservation améliorée, par revêtement d'une surface à découvert de la denrée alimentatire cuite au four ou de la denrée alimentaire pour collation ou bien d'une couche distincte à l'intérieur d'une denrée alimentaire cuite au four ou denrée alimentaire pour collation, à couches multiples, avec la composition suivant la revendication 1.

**25.** Procédé pour améliorer la durée de conservation et l'aspect d'une denrée alimentaire préparée, à constituants multiples, par les étapes consistant :

(a) à revêtir uniformément une surface d'un constituant de la denrée alimentaire préparée avec la composition suivant la revendication 1 pour former un constituant portant un revêtement ;
(b) à mettre le constituant portant un revêtement en contact avec un ou plusieurs autres constituants de la denrée alimentaire préparée, à constituants multiples, de telle sorte que seule la surface portant le revêtement du constituant revêtu entre en contact avec les autres constituants, ce qui permet de former une barrière à court terme contre la migration de l'eau, d'un soluté, d'un gaz, d'un lipide ou de micro-organismes.

**26.** Procédé suivant la revendication 29, dans lequel la denrée alimentaire préparée à constituants multiples est une pizza ; le constituant revêtu est une pâte ; et les autres constituants consistent en une sauce pour pizza et du fromage ; la migration de la sauce pour pizza dans la pâte étant ainsi inhibée et la pâte restant croustillante lorsque la pizza est refroidie ou congelée, stockée et ensuite cuite.

**27.** Procédé suivant la revendication 29, dans lequel la surface du constituant revêtu est revêtue uniformément par pulvérisation, passage à la brosse ou par placage du constituant avec une dispersion de la composition suivant la revendication 1 ; par application de la composition suivant la revendication 1 au constituant sous forme pulvérisée, granulaire ou fondue ; par recouvrement du constituant avec un film préformé de la composition suivant la revendication 1 ; ou bien par immersion du constituant dans une dispersion chauffée de la composition suivant la revendication 1.